(19) Europäisches Patentamt
European Patent Office
Office européen des brevets

(11) Veröffentlichungsnummer: **0 005 782**
**B1**

(12) # EUROPÄISCHE PATENTSCHRIFT

(45) Veröffentlichungstag der Patentschrift: **24.02.82**

(21) Anmeldenummer: **79101540.7**

(22) Anmeldetag: **21.05.79**

(51) Int. Cl.³: **A 01 N 53/00,**
A 01 N 37/08,
C 07 C 103/46,
C 07 C 103/84,
C 07 C 101/36

(54) **Pflanzenwachstum regulierende Verbindungen, deren Verwendung und Herstellung sowie diese Verbindungen enthaltende Mittel, deren Verwendung und Herstellung.**

(30) Priorität: **03.06.78 DE 2824517**
**20.02.79 DE 2906507**

(43) Veröffentlichungstag der Anmeldung:
**12.12.79 Patentblatt 79/25**

(45) Bekanntmachung des Hinweises auf die Patenterteilung:
**24.02.82 Patentblatt 82/8**

(84) Benannte Vertragsstaaten:
**AT BE CH DE FR GB IT NL**

(56) Entgegenhaltungen:
GB - A - 1 026 509
GB - A - 1 047 135
US - A - 2 213 260
US - A - 3 846 112
US - A - 3 956 386

JOURNAL OF THE CHEMICAL SOCIETY, 1960
London GB
T. A. CONNORS: "Some Derivatives of 1-Aminocyclopentane carboxylic Acid and Related Compounds"

(73) Patentinhaber: **BAYER AG**
**Zentralbereich Patente, Marken und Lizenzen**
**D-5090 Leverkusen 1, Bayerwerk (DE)**

(72) Erfinder: **Schröder, Rolf, Dr.**
**Pahlkestrasse 17**
**D-5600 Wuppertal 1 (DE)**
Erfinder: **Lürssen, Klaus, Dr.**
**August-Kierspel-Strasse 89**
**D-5060 Berg. Gladbach 2 (DE)**

(56) Entgegenhaltungen:
LIEBIGS ANNALEN DER CHEMIE, 1973
Weinheim DE
U. SCHOELLKOPF: "1-Amino-cyclopropancarbonsauren über 1-Isocyancyclo-propancarbonsäure-äthylester."

EP 0 005 782 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Pflanzenwachstum regulierende Verbindungen, deren Verwendung und Herstellung sowie diese Verbindungen enthaltende Mittel, deren Verwendung und Herstellung

Die vorliegende Erfindung betrifft die Verwendung von teilweise bekannten Cycloalkancarbonsäure-Derivaten als Wirkstoffe zur Regulierung des Pflanzenwachstums.

Es ist bereits bekannt geworden, daß (2-Chloräthyl)trimethylammonium-chlorid pflanzenwuchsregulierende Eigenschaften aufweist (vgl. US-Patentschrift 3 156 554). Die Wirksamkeit dieses Stoffes ist jedoch, — vor allem bei niedrigen Aufwandmengen —, nicht immer ganz befriedigend.

Weiterhin ist bekannt geworden, daß ein unter der Bezeichnung "Off-Shoot-T"[R] im Handel befindliche Produkt auf Basis von Fettalkoholen mit 6, 8, 10 und 12 Kohlenstoffatomen zur Regulierung des Pflanzenwachstums, insbesondere zur Unterdrückung des Seitentriebwachstums bei Tabak eingesetzt werden kann (vgl. Farm. Chem. Handbook 1975, Meister Publishing Co., Willoughby, Ohio, 1975, Pesticide Dictionary D 147). In manchen Fällen, vor allem bei niedrigen Aufwandmengen, läßt allerdings auch die Wirksamkeit dieses Produktes zu wünschen übrig.

Ebenso ist bereits bekannt, daß 2-Chloräthylphosphonsäure als Pflanzenwachstumsregulator verwendet werden kann (vgl. Deutsche Offenlegungsschrift 2 050 245). Auch ihre Wirkung ist jedoch bei niedrigen Aufwandmengen nicht immer ganz befriedigend.

Es wurde nun gefunden, daß die teilweise bekannten Cycloalkancarbonsäure-Derivate der Formel

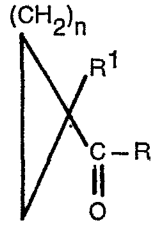

(I)

in welcher

R für Hydroxy, Alkoxy, Aralkoxy, Amino, Alkylamino, Dialkylamino oder für den Rest

$O^{\ominus}M^{\oplus}$

steht, wobei $M^{\oplus}$ für ein Alkali- oder Erdalkali- metallionenäquivalent oder für ein Ammonium-, Alkylammonium, Dialkylammonium-, Trialkylammonium- oder Tetraalkylammoniumion steht,

$R^1$ für Amino, oder für den Rest

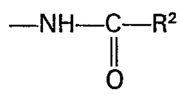

steht, worin $R^2$ für Wasserstoff, Alkyl oder Aryl steht, und $R^1$ ferner für den Rest —$\overset{\oplus}{N}H_3$ $X^{\ominus}$ steht, wobei $X^{\ominus}$ für Chlorid, Bromid, oder Jodid, steht, und

n für 1 bis 5 steht,

sehr gut zur Regulierung des Pflanzenwachstums geeignet sind.

Überraschenderweise zeigen die erfindungsgemäß verwendeten Cycloalkancarbonsäure-Derivate der Formel (I) eine wesentlich höhere pflanzenwuchsregulierende Wirkung als die aus dem Stand der Technik bekannten Stoffe (2-Chloräthyl)trimethylammonium-chlorid, Off-Shoot-T[R] und 2-Chloräthylphosphonsäure, welches hochaktive Wirkstoffe gleicher Wirkungsart sind. Die erfindungsgemäß verwendbaren Stoffe stellen somit eine wertvolle Bereicherung der Technik dar.

Die erfindungsgemäß verwendbaren Cycloalkancarbonsäure-Derivate sind durch die Formel (I) allgemein definiert. Vorzugsweise stehen in der Formel (I)

R für Hydroxy, Alkoxy mit 1 bis 20 Kohlenstoffatomen, Benzyloxy, Amino, Alkylamino mit 1 bis 4 Kohlenstoffatomen, Dialkylamino mit 1 bis 4 Kohlenstoffatomen je Alkylrest oder für den Rest

$O^{\ominus}M^{\oplus}$

wobei $M^{\oplus}$ für ein Natrium- oder Kaliumion, ein Magnesium-oder Calciumionenäquivalent, Ammonium, Alkylammonium mit 1 bis 4 Kohlenstoffatomen, Dialkylammonium, Trialkylammonium oder Tetraalkylammonium mit jeweils 1 bis 4 Kohlenstoffatomen je Alkylrest steht,

$R^1$ für Amino oder den Rest —NH—CO—$R^2$, worin $R^2$ für Wasserstoff, Alkyl mit 1 bis 4 Kohlenstoffatomen oder Phenyl steht, oder für den Rest —$\overset{\oplus}{N}H_3$ $Cl^{\ominus}$ und

n für 1 oder 2.

Ganz besonders bevorzugt sind solche Verbindungen der Formel (I), in denen

R für Hydroxy, Alkoxy mit 1 bis 10 Kohlenstoffatomen, Benzyloxy, Amino, Alkylamino mit 1 oder 2 Kohlenstoffatomen, Dialkylamino mit 1 oder 2 Kohlenstoffatomen je Alkylrest oder für den Rest

$O^{\ominus}M^{\oplus}$ steht,

wobei $M^{\oplus}$ für ein Natrium- oder Kaliumion, ein Magnesium-oder Calciumionenäquivalent, Ammonium, Alkylammonium mit 1 oder 2 Kohlenstoffatomen, Dialkylammonium, Trialkylammonium oder Tetraalkylammonium mit jeweils 1 oder 2 Kohlenstoffatomen je Alkylrest steht,

$R^1$ für Amino, Formylamino, Acetylamino, Propionylamino, Benzoylamino oder für $NH_3^{\oplus}Cl^{\ominus}$ steht und

n für 1 oder 2 steht.

Als Beispiele für die Verbindungen der Formel (I) seien genannt:
α-Amino-, α-Formylamino-, α-Acetylamino-, α-Benzoylamino- cyclopropancarbonsäure und -cyclobutancarbonsäure,
deren
Natrium-, Kalium-, Magnesium-, Calcium-, Ammonium-, Methylammonium-, Äthylammonium-, Dimethylammonium-, Diäthylammonium-, Trimethylammonium-, Triäthylammonium-, Tetramethylammonium- und Tetraäthylammonium-salz, ferner
deren
Methyl-, Äthyl- und Benzylester sowie deren Amid, Methylamid, Äthylamid, Dimethylamid und Diäthylamid;
außerdem
α-Amino-cyclopropan- und α-Amino-cyclobutancarbonsäuremethylester-, -äthylester-, -propylester-, butylester-, pentylester-, hexylester-, -octylester-, -benzylester-hydrochlorid und α-Amino-cyclopropan- und α-Aminocyclobutan-carbonsäure-hydrochlorid.

Die Verbindungen der Formel I sind teilweise bekannt (vergleiche Liebigs Ann. Chem. *1973*, 611—618; Chem. Ber.*108* (1975), 1580—1592; J. Chem. Soc. *1960*, 2119—2132 und *1962*, 3977—3980); GB—PS 1 026 509 und GB—PS 1 047 135).

Einzelne der erfindungsgemäß verwendbaren Verbindungen sind neu. Diese neuen Verbindungen sind charakterisiert durch die Formel

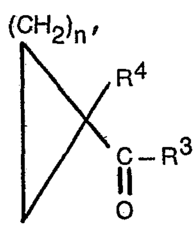

(Ia)

in welcher

$R^3$ für Alkoxy mit 1 bis 20 Kohlenstoffatomen, Benzyloxy, Amino, Alkylamino mit 1 bis 4 Kohlenstoffatomen, Dialkylamino mit 1 bis 4 Kohlenstoffatomen je Alkylrest oder für den Rest

$O^{\ominus}M^{\oplus}$

steht, wobei $M^{\oplus}$ für ein Natrium- oder Kaliumion, ein Magnesium- oder Calciumionenäquivalent, Ammonium, Alkylammonium mit 1 bis 4 Kohlenstoffatomen, Dialkylammonium, Trialkylammonium oder Tetraalkylammonium mit jeweils 1 bis 4 Kohlenstoffatomen je Alkylrest steht,

$R^4$ für Amino oder den Rest

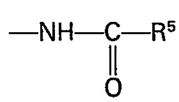

steht, worin

$R^5$ für Wasserstoff steht, wenn $R^3$ nicht für Ethoxy steht, ferner für Alkyl mit 1 bis 4 Kohlenstoffatomen steht, jedoch nicht für Methyl, wenn $R^3$ für Methoxy steht, und $R^5$ außerdem für Phenyl steht, und

$R^4$ weiterhin für $—\overset{\oplus}{N}H_3\ Cl^{\ominus}$ steht, sofern $R^3$ nicht für Ethoxy steht, und

n' für 1 oder 2 steht.

Die neuen Stoffe lassen sich nach mehreren Verfahren herstellen. So erhält man

a) diejenigen Cycloalkancarbonsäure-Derivate der Formel (Ia), in denen $R^4$ für Formylamino steht, indem man $\alpha$-Isocyanocycloalkancarbonsäure-Derivate der Formel

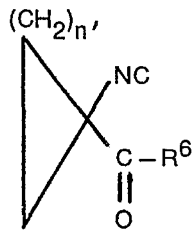

(II)

in welcher

$R^6$ für Alkoxy mit 1 bis 20 Kohlenstoffatomen, — ausgenommen Ethoxy —, Benzyloxy, Amino, Alkylamino mit 1 bis 4 Kohlenstoffatomen, Dialkylamino mit 1 bis 4 Kohlenstoffatomen je Alkylrest oder für den Rest $O^{\ominus}M^{\oplus}$ steht, worin $M^{\oplus}$ die oben angegebene Bedeutung hat und

n' die oben angegebene Bedeutung hat,

gegebenenfalls in Gegenwart eines Katalysators und gegebenenfalls in Gegenwart eines zusätzlichen Verdünnungsmittels mit Wasser hydrolysiert.

b) diejenigen Cycloalkancarbonsäure-Derivate der Formel (Ia), in denen $R^4$ für Formylamino steht und $R^3$ für OM steht, wobei M für ein Natrium- oder Kaliumion steht, indem man $\alpha$-Isocyanocycloalkancarbonsäure-Derivate der Formel

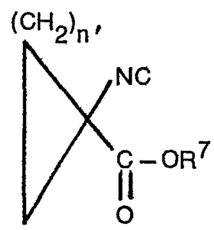

(III)

in welcher

$R^7$ für Alkyl mit 1 bis 13 Kohlenstoffatomen steht, und

n' die oben angegebene Bedeutung hat,

unter schonenden Bedingungen, gegebenenfalls in Gegenwart eines zusätzlichen Verdünnungsmittels, mit Natrium- oder Kaliumhydroxid umsetzt und die dabei entstehenden $\alpha$-Isocyano-carbonsäure-Salze der Formel

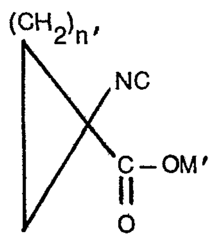

(IV)

in welcher

M' für ein Natrium- oder Kaliumion steht und

n' die oben angegebene Bedeutung hat,

durch Kochen mit wäßrigem Alkohol hydrolysiert,

c) diejenigen Cycloalkancarbonsäure-Derivate der Formel (Ia), in denen $R^4$ für Formylamino steht und $R^3$ für OM steht, worin M für die angegebenen Reste, jedoch nicht für ein Natrium- oder Kaliumion steht, indem man gemäß Verfahren (b) herstellbare $\alpha$-Formylamino-cycloalkancarbonsäure-Salze der Formel

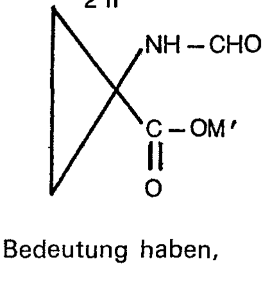

(Ib)

in welcher

M' und n' die oben angegebene Bedeutung haben,

gegebenenfalls in Gegenwart eines Verdünnungsmittels mit einer äquivalenten Menge einer starken Säure behandelt und die dabei entstehenden $\alpha$-Formylaminocycloalkancarbonsäuren der Formel

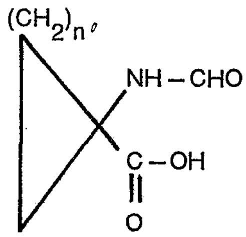

(Ic)

in welcher

n' die oben angegebene Bedeutung hat,

mit Verbindungen der Formel

$M''OR^8$ (V)

in welcher

M'' für ein Magnesium- oder Calciumionenäquivalent, für Ammonium, Alkylammonium mit 1 bis 4 Kohlenstoffatomen, Dialkylammonium, Trialkylammonium oder Tetraalkylammonium mit jeweils 1 bis 4 Kohlenstoffatomen je Alkylrest steht, und

$R^8$ für Wasserstoff, Methyl oder Äthyl steht, gegebenenfalls in Gegenwart eines Verdünnungsmittels umsetzt,

d) diejenigen Cycloalkancarbonsäure-Derivate der Formel (Ia), in denen $R^4$ für Formylamino steht und $R^3$ für Amino, Alkylamino mit 1 bis 4 Kohlenstoffatomen oder Dialkylamino mit 1 bis 4 Kohlenstoffatomen je Alkylrest steht, indem man gemäß Verfahren (b) herstellbare $\alpha$-Isocyano-carbonsäure-Salze der Formel

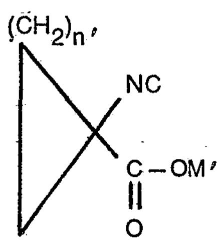

(IV)

in welcher

M' und n' die oben angegebene Bedeutung haben,

mit Verbindungen der Formel

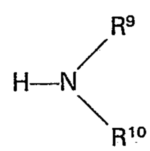

(VI)

in welcher

$R^9$ und $R^{10}$ gleich oder verschieden sind und für Wasserstoff oder Alkyl mit 1 bis 4 Kohlenstoffatomen stehen, in Gegenwart von Salzsäure sowie gegebenenfalls in Gegenwart eines Verdünnungsmittels umsetzt,

e) diejenigen Verbindungen der Formel (Ia), in denen $R^3$ für Alkoxy mit 1 bis 20 Kohlenstoffatomen oder Benzyloxy steht und $R^4$ für den Rest $-\overset{\oplus}{N}H_3Cl^{\ominus}$ steht, — sofern $R^3$ nicht für Ethoxy steht —, indem man gemäß Verfahren (a) herstellbare $\alpha$-Formylaminocycloalkancarbonsäure-Derivate der Formel

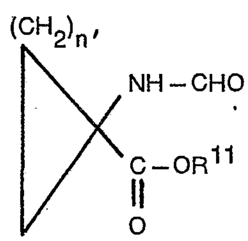

(Id)

in welcher

$R^{11}$ für Alkyl mit 1 bis 20 Kohlenstoffatomen oder Benzyl steht und

n' die oben angegebene Bedeutung hat,

mit Chlorwasserstoff der Formel

HCl (VII)

gegebenenfalls in Gegenwart eines Verdünnungsmittels umsetzt,

f) diejenigen Cycloalkancarbonsäure-Derivate der Formel (Ia), in denen $R^4$ für den Rest —NH—CO—$R^5$ steht, indem man $\alpha$-Aminocycloalkancarbonsäure-Derivate der Formel

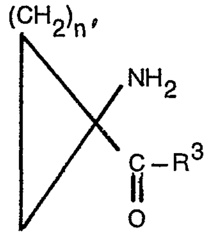

(Ie)

in welcher

$R^3$ und n′ die oben angegebene Bedeutung haben,

mit Acylierungsmitteln der Formel

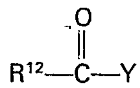

(VIII)

in welcher

$R^{12}$ für Wasserstoff, Alkyl mit 1 bis 4 Kohlenstoffatomen oder Phenyl steht und

Y für Chlor oder für den Rest —O—CO—$R^{12}$ steht, in welchem $R^{12}$ die vorgenannte Bedeutung hat,

in Gegenwart eines Säureakzeptors sowie gegebenenfalls in Gegenwart eines Verdünnungsmittels umsetzt,

g) diejenigen Cycloalkancarbonsäure-Derivate der Formel (Ia), in denen $R^4$ für Amino steht, indem man $\alpha$-Aminocycloalkancarbonsäure-chloride der Formel

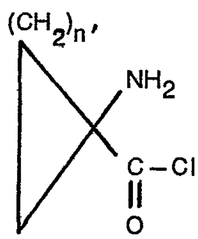

(IX)

in welcher

n′ die oben angegebene Bedeutung hat,

mit Verbindungen der Formel

$R^3H$ (X)

in welcher

$R^3$ die oben angegebene Bedeutung hat,

gegebenenfalls in Gegenwart eines Säurebindemittels sowie gegebenenfalls in Gegenwart eines Verdünnungsmittels umsetzt.

Bevorzugte neue Cycloalkancarbonsäure-Derivate sind solche Verbindungen der Formel (Ia), in denen

$R^3$ für Alkoxy mit 1 bis 10 Kohlenstoffatomen, Benzyloxy, Amino, Alkylamino mit 1 oder 2 Kohlenstoffatomen, Dialkylamino mit 1 oder 2 Kohlenstoffatomen je Alkylrest oder für den Rest

$O^{\ominus}M^{\oplus}$

wobei $M^{\oplus}$ für ein Natrium- oder Kaliumion, ein Magnesium- oder Calciumionenäquivalent, Ammonium, Alkylammonium mit 1 oder 2 Kohlenstoffatomen, Dialkylammonium, Trialkylammonium oder Tetraalkylammonium, jeweils mit 1 oder 2 Kohlenstoffatomen je Alkylrest steht, und

$R^4$ und n′ die oben angegebene Bedeutung haben.

Verwendet man beispielsweise bei Verfahren (a) $\alpha$-Isocyanocyclopropancarbonsäure-methylester und wäßrig-alkoholische Salzsäure, bei Verfahren (b) $\alpha$-Isocyano-cyclopropancarbonsäure-methylester und Natriumhydroxid in Äthanol, bei Verfahren (c) in der ersten Stufe $\alpha$-Formylamino-cyclopropancarbonsäure-Natriumsalz und konzentrierte Salzsäure und in der zweiten Stufe eine wäßrig alkoholische Calciumhydroxid-Lösung, bei Verfahren (d) $\alpha$-Isocyano-cyclopropancarbonsäure-Natriumsalz und konzentrierten Ammoniak in Kombination mit konzentrierter Salzsäure, bei Verfahren (e) $\alpha$-Formylamino-cyclopropancarbonsäure-methylester und verdünnte Salzsäure, bei Verfahren (f) $\alpha$-Amino-cyclopropancarbonsäure und Benzoylchlorid und bei Verfahren (g) $\alpha$-Aminocyclopropancarbonsäure-chlorid und Diethylamin als Reaktionspartner, so können die Umsetzungen nach den Verfahren (a) bis (g) durch die folgenden Formelschemata wiedergegeben werden:

a)

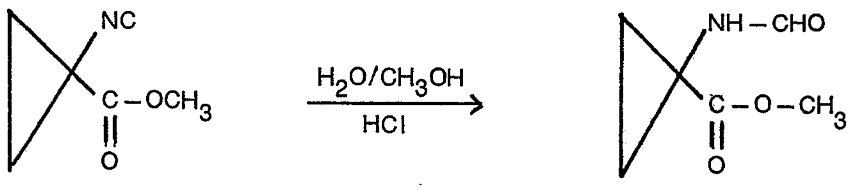
H2O/CH3OH
HCl

b)

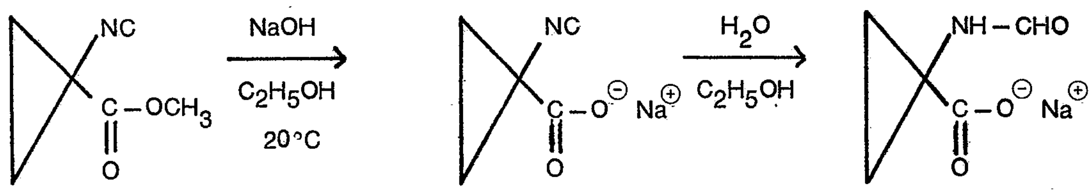
NaOH
C2H5OH
20°C
H2O
C2H5OH

c)

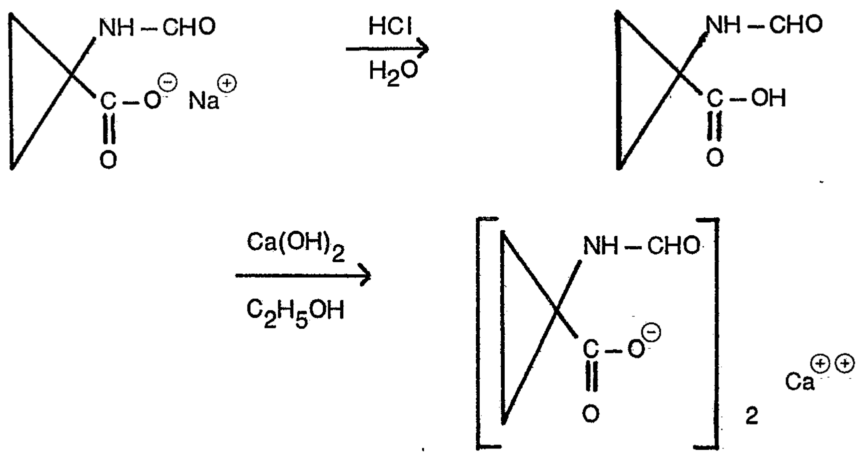
HCl
H2O
Ca(OH)2
C2H5OH

d)

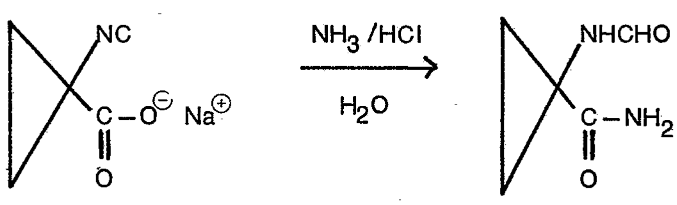
NH3 /HCl
H2O

e)

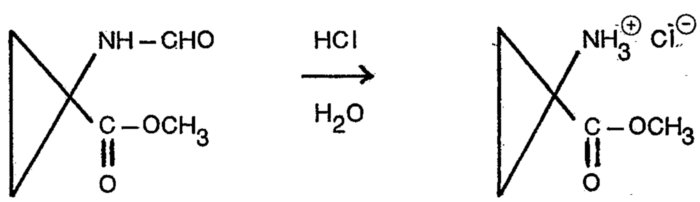
HCl
H2O

f)

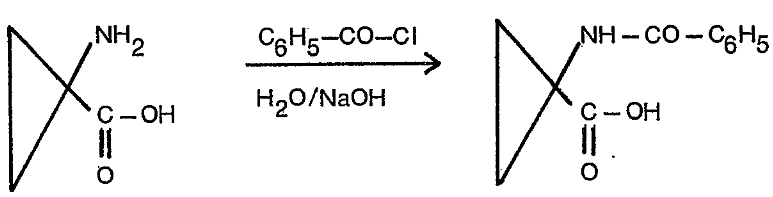
C6H5–CO–Cl
H2O/NaOH

g)

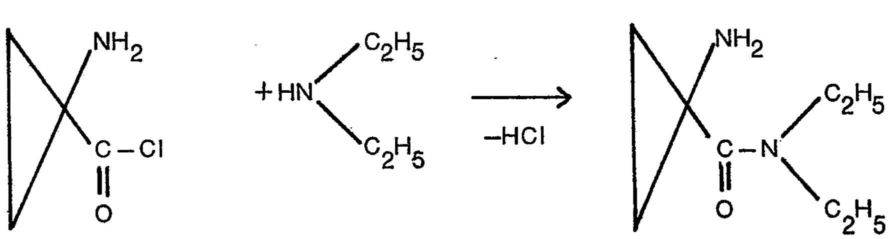
–HCl

Die bei den erfindungsgemäßen Verfahren (a) und (b) als Ausgangsstoffe zu verwendenden α-Isocyano-cycloalkan-carbonsäure-Derivate sind durch die Formeln (II) und (III) allgemein definiert. In der Formel (II) steht $R^6$ vorzugsweise für Alkoxy mit 1 bzw. 3—10 Kohlenstoffatomen, Benzyloxy, Amino, Alkylamino mit 1 oder 2 Kohlenstoffatomen, Dialkylamino mit 1 oder 2 Kohlenstoffatomen je Alkylrest, oder für den Rest $O^{\ominus}M^{\oplus}$, wobei $M^{\oplus}$ für ein Natrium- oder Kaliumion, ein Magnesium- oder Calciumionenäquivalent, Ammonium, Alkylammonium mit 1 oder 2 Kohlenstoffatomen, Dialkylammonium, Trialkylammonium oder Tetraalkylammonium mit jeweils 1 oder 2 Kohlenstoffatomen je Alkylrest steht. $R^7$ steht in der Formel (III) vorzugsweise für Methyl oder Äthyl.

Die α-Isocyano-cycloalkancarbonsäure-Derivate der Formeln (II) und (III) sind bereits bekannt oder lassen sich nach im Prinzip bekannten Verfahren herstellen (vgl. DT—OS 2 063 502; Angew. Chem. *83*, (1971), 357—358; Chem. Ber. 108 (1975), 1580—1592 und Liebigs Ann. Chem. *1973*, 611—618).

Die bei den erfindungsgemäßen Verfahren (c) bis (g) als Reaktionskomponenten zu verwendenden Verbindungen sind durch die Formeln (V), (VI), (VII), (VIII) und (X) definiert. In der Formel (V) steht M'' vorzugsweise für diejenigen Reste, die bereits im Zusammenhang mit der Beschreibung der α-Isocyano-cycloalkancarbonsäure-Derivate der Formel (II) vorzugsweise für M genannt wurden, jedoch nicht für Natrium und Kalium. In der Formel (VI) stehen $R^9$ und $R^{10}$ unabhängig voneinander vorzugsweise für Wasserstoff und Alkyl mit 1 oder 2 Kohlenstoffatomen. In der Formel (X) steht $R^3$ vorzugsweise für diejenigen Reste, die bereits in Zusammenhang mit der Beschreibung der erfindungsgemäßen Verbindung der Formel (Ia) vorzugsweise für $R^3$ genannt wurden. — Die Verbindungen der Formeln (V), (VI), (VII), (VIII) und (X) sind bereits bekannt.

Die bei dem erfindungsgemäßen Verfahren (f) als Ausgangsstoffe zu verwendenden α-Amino-cycloalkancarbonsäure-Derivate sind durch die Formel (Ie) allgemein definiert. In dieser Formel steht $R^3$ vorzugsweise für diejenigen Reste, die bereits im Zusammenhang mit der Beschreibung der erfindungsgemäßen Verbindungen der Formel (Ia) vorzugsweise für $R^3$ genannt wurden. Die Verbindungen der Formel (Ie) lassen sich nach dem erfindungsgemäßen Verfahren (g) herstellen.

Die bei dem erfindungsgemäßen Verfahren (g) als Ausgangsstoffe zu verwendenden α-Aminocycloalkancarbonsäurechloride sind durch die Formel (IX) definiert. Die Verbindungen der Formel (IX) sind bislang noch nicht bekannt, sie lassen sich jedoch herstellen, indem man die entsprechenden Säuren nach üblichen Methoden, z.B. mit Thionylchlorid, in die Säurechloride überführt. Die benötigten α-Amino-cycloalkancarbonsäuren, die den Verbindungen der Formel (IX) zugrunde liegen, sind bekannt oder lassen sich nach bekannten Methoden herstellen (vgl. J. Org. Chem. *29* (1964), 2764—2766; Synthesis *1978*, 46; J. Chem. Soc. *1960*, 2119—2132 und *1962*, 3977—3980).

Beim Herstellungsverfahren (a) arbeitet man im allgemeinen in wässriger Lösung, oder in einem Verdünnungsmittel, welches Wasser und ein organisches Lösungsmittel enthält, wie z.B. Alkohol, Dioxan oder Tetrahydrofuran. Die Reaktion kann unter Säurekatalyse, beispielsweise mit Salzsäure als Katalysator durchgeführt werden. Die Reaktionstemperatur kann innerhalb eines größeren Bereichs variiert werden. Im allgemeinen arbeitet man bei Temperaturen zwischen 0 und 100°C, bei Verwendung eines Katalysators vorzugsweise bei 10 bis 40°C, sonst bevorzugt bei 60 bis 90°C.

Die Isolierung der Reaktionsprodukte erfolgt beim Verfahren (a) nach üblichen Methoden: Man extrahiert mit einem mit Wasser nicht mischbaren Lösungsmittel, z.B. mit Methylenchlorid, trocknet die organische Phase, filtriert und destilliert das Lösungsmittel im Vakuum ab. Die zurückbleibenden Rohprodukte können durch Destillation oder gegebenenfalls durch Umkristallisation gereinigt werden.

Verfahren (b) wird im allgemeinen unter Verwendung eines oder mehrerer organischer Lösungsmittel durchgeführt. Als solche kommen insbesondere in Betracht: Äther wie Diäthyläther, Dibutyläther, Tetrahydrofuran und Dioxan, Ketone wie Aceton, Methyläthylketon, Methylisopropylketon und Methylisobutylketon, Nitrile wie Acetonitril und Propionitril und Alkohole wie Methanol, Äthanol und Propanol. Die Umsetzung wird im allgemeinen bei Temperaturen zwischen 0 und 100°C, im ersten Reaktionsschritt vorzugsweise bei 5 bis 25°C, in der zweiten Stufe vorzugsweise bei 25 bis 90°C durchgeführt.

Das Verfahren kann in zwei isolierten Reaktionsschritten oder als ein "Ein-Topf—Verfahren" durchgeführt werden. Im allgemeinen wird das als Ausgangsstoff einzusetzende α-Isocyano-cycloalkancarbonsäure-derivat in einem der angegebenen Lösungsmittel dispergiert und mit alkoholischer Alkalihydroxidlösung, welche 1 bis 1,2 Mol Hydroxid je Mol Carbonsäurederivat enthält, versetzt. Die zunächst entstehenden α-Isocyano-cycloalkancarbonsäure-salze kristallisieren im allgemeinen bei längerem Rühren aus und können durch Absaugen isoliert werden. Die weitere Umwandlung dieser Intermediate erfolgt im allgemeinen durch Kochen mit wässrigem Alkohol, welcher 1 bis 1,2 Mol Wasser je Mol α-Isocyano-cycloalkancarbonsäure-salz enthält. Die Aufarbeitung erfolgt beispielsweise durch Versetzen der abgekühlten Reaktionsmischung mit Äther und Absaugen des dabei auskristallisierten α-Formylamino-cycloalkancarbonsäure-salzes.

Zur Durchführung von Verfahren (c) werden im allgemeinen die einzusetzenden α-Formylamino-cycloalkancarbonsäure-salze in Wasser gelöst und mit äquimolaren Mengen konzentrierter Salzsäure versetzt. Die Umsetzung wird bei Temperaturen zwischen 0 und 30°C durchgeführt. Die Produkte, welche nach längerem Stehen der Reaktionsgemische auskristallisieren, können durch Absaugen isoliert werden. -Bei der Durchführung der zweiten Stufe des Verfahrens (c) werden im allgemeinen Alkohole, insbesondere Methanol und Äthanol, als Lösungsmittel verwendet. Auf 1 Mol $\alpha$-Formylamino-cycloalkancarbonsäure setzt man 1 Mol einer Base der Formel (V) ein. Die Umsetzung erfolgt bei Temperaturen zwischen 10 und 40°C. Nach kurzem Rühren der Reaktionsmischung wird das Lösungsmittel im Vakuum abdestilliert, der Rückstand mit Äther verrieben, abgesaugt und getrocknet.

Zur Durchführung von Verfahren (d) werden im allgemeinen bis zu 3 Mol Ammoniak oder Amin der Formel (VI) und 1 Mol Salzsäure je Mol $\alpha$-Isocyano-cycloalkancarbonsäurederivat eingesetzt. Die Umsetzung wird im allgemeinen unter Verwendung von Wasser als Lösungsmittel bei Temperaturen zwischen 0 und 40°C durchgeführt. Nach mehrstündigem Rühren des Reaktionsgemisches werden flüchtige Komponenten und Lösungsmittel im Vakuum abdestilliert. Das zurückbleibende Rohprodukt arbeitet man nach üblichen Methoden auf, z.B. durch Extraktion mit Methylenchlorid, Trocknen, Filtration und Einengen des Filtrats.

Verfahren (e) wird gewöhnlich unter Verwendung von wäßriger Salzsäure als Reaktionsmedium durchgeführt. Im allgemeinen werden darin die als Ausgangsstoffe einzusetzenden $\alpha$-Formylamino-cycloalkancarbonsäure-derivate einige Tage bei Raumtemperatur gerührt oder mehrere Stunden unter Rückfluß zum Sieden erhitzt. Dann wird im Vakuum zur Trockne eingedampft und die zurückbleibenden kristallinen Produkte werden über Phosphorpentoxid im Exsikkator getrocknet.

Bei Verfahren (f) wird im allgemeinen Wasser als Lösungsmittel verwendet. Auf 1 Mol $\alpha$-Amino-cycloalkancarbonsäure-derivat werden 1 bis 1,2 Mol Acylierungsmittel und 2 bis 2,5 Mol Säureakzeptor eingesetzt. Als Acylierungsmittel werden vorzugsweise verwendet: Acetanhydrid, Acetylchlorid, Propionsäureanhydrid, Propionylchlorid und Benzoylchlorid.

Als Säureakzeptoren werden vorzugsweise verwendet: Alkalihydroxide wie Natrium- und Kaliumhydroxid oder Alkalicarbonate und -hydrogencarbonate wie Natrium- carbonat und Natriumhydrogencarbonat.

Die Umsetzung nach Verfahren (f) wird bei Temperaturen zwischen 10 und 40°C durchgeführt. Nach kurzem Rühren der Reaktionsmischung wird mit einer starken Säure, wie z.B. Salzsäure, pH 1 eingestellt. Die dabei kristallin anfallenden Produkte können durch Absaugen isoliert und durch Umkristallisation gereinigt werden.

Bei dem erfindungsgemäßen Verfahren (g) kommen als Verdünnungsmittel Wasser und inerte organische Lösungsmittel in Betracht. In vielen Fällen kann jedoch auch im Überschuß eingesetzte Komponente (X) als Verdünnungsmittel fungieren.

Als Säurebindemittel kommen bei dem erfindungsgemäßen Verfahren (g) alle üblichen Säureakzeptoren in Betracht. Zweckmäßigerweise fungiert die im Überschuß eingesetzte Reaktionskomponente der Formel (X) jedoch als Säurebindemittel.

Die Reaktionstemperaturen können bei dem erfindungsgemäßen Verfahren innerhalb eines größeren Bereiches variiert werden. Im allgemeinen arbeitet man bei Temperaturen zwischen 0°C und 40°C, vorzugsweise zwischen 10°C und 25°C.

Bei der Durchführung des erfindungsgemäßen Verfahrens (g) setzt man auf 1 Mol an $\alpha$-Amino-cycloalkancarbonsäurechlorid der Formel (IX) etwa 1 bis 2 Mol einer Verbindung der Formel (X) sowie gegebenenfalls 1 Mol Säurebindemittel ein. Die Aufarbeitung erfolgt nach üblichen Methoden.

Die erfindungsgemäß verwendbaren Wirkstoffe greifen in den Metabolismus der Pflanzen ein und können deshalb als Wachstumsregulatoren eingesetzt werden.

Für die Wirkungsweise von Pflanzenwachstumsregulatoren gilt nach der bisherigen Erfahrung, daß ein Wirkstoff eine oder auch mehrere verschiedenartige Wirkungen auf Pflanzen ausüben kann. Die Wirkungen der Stoffe hängen im wesentlichen ab von dem Zeitpunkt der Anwendung, bezogen auf das Entwicklungsstadium des Samens oder der Pflanze sowie von den auf die Pflanzen oder ihre Umgebung ausgebrachten Wirkstoffmengen und von der Art der Applikation. In jedem Fall sollen Wachstumsregulatoren die Kulturpflanzen in gewünschter Weise positiv beeinflussen.

Pflanzenwuchsregulierende Stoffe können zum Beispiel zur Hemmung des vegetativen Pflanzenwachstums eingesetzt werden. Eine derartige Wuchshemmung ist unter anderem bei Gräsern von wirtschaftlichem Interesse, denn durch eine Dämpfung des Graswachstums kann z.B. die Häufigkeit der Grassschnitte in Ziergärten, Park- und Sportanlagen oder an Straßenrändern reduziert werden. Von Bedeutung ist auch die Hemmung des Wuchses von krautigen und holzigen Pflanzen an Straßenrändern und in der Nähe von Überlandleitungen oder ganz allgemein in Bereichen, in denen ein starker Bewuchs unerwünscht ist.

Wichtig ist auch die Anwendung von Wachstumsregulatoren zur Hemmung des Längenwachstums bei Getreide, denn durch eine Halmverkürzung wird die Gefahr des Umknickens ("Lagerns") der Pflanzen vor der Ernte verringert oder vollkommen beseitigt. Außerdem können Wachstumsregulatoren bei Getreide eine Halmverstärkung hervorrufen, die ebenfalls dem Lagern entgegenwirkt.

Eine Hemmung des vegetativen Wachstums erlaubt bei vielen Kulturpflanzen eine dichtere Anpflanzung der Kultur, so daß Mehrertrag bezogen auf die Bodenfläche erzielt werden kann.

Ein weiterer Mechanismus der Ertragssteigerung mit Wuchshemmern beruht darauf, daß die Nährstoffe in stärkerem Maße der Blüten- und Fruchtbildung zugute kommen, während das vegetative Wachstum eingeschränkt wird.

Mit Wachstumsregulatoren läßt sich häufig auch eine Förderung des vegetativen Wachstums erzielen. Dies ist von großem Nutzen, wenn die vegetativen Pflanzenteile geerntet werden. Eine

Förderung des vegetativen Wachstums kann aber auch gleichzeitig zu einer Förderung des generativen Wachstums führen, so daß z.B. mehr oder größere Früchte zur Ausbildung kommen.

Ertragssteigerungen können in manchen Fällen auch durch einen Eingriff in den pflanzlichen Stoffwechsel erreicht werden, ohne daß sich Änderungen des vegetativen Wachstums bemerkbar machen. Wachstumsregulatoren können ferner eine Veränderung der Zusammensetzung der Pflanzen bewirken, um so eine bessere Qualität der Ernteprodukte herbeizuführen. So ist es beispielsweise möglich, den Gehalt an Zucker in Zuckerrüben, Zuckerrohr, Ananas sowie Zitrusfrüchten zu erhöhen oder den Proteingehalt in Soja oder Getreide zu steigern.

Unter dem Einfluß von Wachstumsregulatoren kann es zur Ausbildung parthenokarper Früchte kommen. Ferner kann das Geschlecht der Blüten beeinflußt werden.

Mit Wachstumsregulatoren läßt sich auch die Produktion oder der Abfluß von sekundären Pflanzenstoffen positiv beeinflussen. Als Beispiel sei die Stimulierung des Latexflusses bei Gummibäumen genannt.

Während des Wachstums der Pflanze kann durch Einsatz von Wachstumsregulatoren auch die seitliche Verzweigung durch eine chemische Brechung der Apikaldominanz vermehrt werden. Daran besteht z.B. Interesse bei der Stecklingsvermehrung von Pflanzen. Es ist jedoch auch möglich, das Wachstum der Seitentriebe zu hemmen, z.B. um bei Tabakpflanzen nach der Dekapitierung die Ausbildung von Seitentrieben zu verhindern und damit das Blattwachstum zu fördern.

Unter dem Einfluß von Wachstumsregulatoren kann der Blattbestand von Pflanzen so gesteuert werden, daß ein Entblättern der Pflanzen zu einem gewünschten Zeitpunkt erreicht wird. Eine derartige Entlaubung ist von Interesse, um eine mechanische Beerntung, z.B. bei Wein oder Baumwolle, zu erleichtern oder um die Transpiration zu einem Zeitpunkt herabzusetzen, an dem die Pflanze verpflanzt werden soll.

Durch Einsatz von Wachstumsregulatoren läßt sich der vorzeitige Fruchtfall verhindern. Es ist jedoch auch möglich, den Fruchtfall, — zum Beispiel bei Obst —, im Sinne einer chemischen Ausdünnung bis zu einem bestimmten Ausmaß zu fördern. Wachstumsregulatoren können auch dazu dienen, um bei Kulturpflanzen zum Zeitpunkt der Ernte die zum Ablösen der Früchte erforderliche Kraft zu vermindern, so daß eine mechanische Beerntung der Pflanzen ermöglicht beziehungsweise eine manuelle Beerntung erleichtert wird.

Mit Wachstumsregulatoren läßt sich ferner eine Beschleunigung oder auch eine Verzögerung der Reife des Erntegutes vor oder nach der Ernte erreichen. Dieses ist von besonderem Vorteil, weil sich dadurch eine optimale Anpassung an die Bedürfnisse des Marktes herbeiführen läßt. Weiterhin können Wachstumsregulatoren in manchen Fällen die Fruchtausfärbung verbessern. Darüberhinaus kann mit Hilfe von Wachstumsregulatoren auch eine zeitliche Konzentrierung der Reife erzielt werden. Damit werden die Voraussetzungen dafür geschaffen, daß z.B. bei Tabak, Tomaten oder Kaffee, eine vollständige mechanische oder manuelle Beerntung in nur einem Arbeitsgang vorgenommen werden kann.

Durch Anwendung von Wachstumsregulatoren kann auch die Samen- oder Knospenruhe der Pflanzen, also die endogene Jahresrhythmik, beeinflußt werden, so daß die Pflanzen, wie z.B. Ananas oder Zierpflanzen in Gärtnereien, zu einem Zeitpunkt keimen, austreiben oder blühen, an dem sie normalerweise hierzu keine Bereitschaft zeigen.

Mit Wachstumsregulatoren kann auch erreicht werden, daß der Austrieb von Knospen oder die Keimung von Samen verzögert wird, z.B. um in frostgefährdeten Gebieten eine Schädigung durch Spätfröste zu vermeiden.

Wachstumsregulatoren können auch eine Halophilie bei Kulturpflanzen erzeugen. Damit werden die Voraussetzungen dafür geschaffen, daß eine Kultivierung von Pflanzen auf salzhaltigen Böden durchgeführt werden kann.

Mit Wachstumsregulatoren kann auch eine Frost- und Trockenresistenz bei Pflanzen induziert werden.

Die Wirkstoffe können in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe und Feinstverkapselungen in polymeren Stoffen und in Hüllmassen für Saatgut, sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur

und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemäßen Wirkstoffe können in den Formulierungen in Mischung mit anderen bekannten Wirkstoffen vorliegen, wie Fungizide, Insektizide; Akarizide und Herbizide, sowie in Mischungen mit Düngemitteln und anderen Wachstumsregulatoren.

Die Wirkstoffe können als solche, in Form ihrer Formulierungen oder der daraus bereiteten Anwendungsformen, wie gebrauchsfertige Lösungen, emulgierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z.B. durch Gießen, Verspritzen, Versprühen, Verstreuen, Verstäuben, Verschäumen, Begasen usw. Es ist ferner möglich, die Wirkstoffe nach dem Ultra-Low-Volume-Verfahren auszubringen, Pflanzen oder Pflanzenteile mit der Wirkstoffzubereitung oder dem Wirkstoff selbst zu bestreichen oder die Wirkstoffzubereitung oder den Wirkstoff selbst in den Boden zu injizieren. Es kann auch das Saatgut der Pflanze behandelt werden.

Die Wirkstoffkonzentrationen können in einem größeren Bereich variiert werden. Im allgemeinen verwendet man pro Hektar Bodenfläche 0,01 bis 50 kg, bevorzugt 0,05 bis 10 kg an Wirkstoff.

Für die Anwendungszeit gilt, daß die Anwendung der Wachstumsregulatoren in einem bevorzugten Zeitraum vorgenommen wird, dessen genaue Abgrenzung sich nach dem klimatischen und vegetativen Gegebenheiten richtet.

In den nachfolgenden Beispielen wird die Aktivität der erfindungsgemäßen Stoffe als Wachstumsregulatoren dargestellt, ohne damit die Möglichkeit weiterer Anwendungen als Wachstumsregulatoren auszuschließen.

Beispiel A

Hemmung des Seitentriebwachstums bei Tabak

Lösungsmittel: 30 Gewichtsteile Dimethylformamid
1 Gewichtsteil Polyoxyäthylensorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Tabakpflanzen werden im Gewächshaus bis zur Entfaltung des 7. Laubblattes angezogen. In diesem Stadium wird die apikale Vegetationsspitze der Pflanzen entfernt und die Pflanzen werden bis zum Abtropfen mit den Wirkstoffzubereitungen besprüht. Nach 3 Wochen werden die Seitentriebe der Pflanzen herausgebrochen und gewogen. Das Gewicht der Seitentriebe der behandelten Pflanzen wird mit dem der Kontrollpflanzen verglichen. 100% Hemmung bedeutet das Fehlen von Seitentrieben und 0% ein Wachstum der Seitentriebe entsprechend dem der Kontrollpflanzen.

Wirkstoffe, Wirkstoffkonzentrationen und Resultate gehen aus der nachfolgenden Tabelle hervor.

TABELLE A

Hemmung des Seitentriebwachstums bei Tabak

| Wirkstoff | Wirkstoffkonzentration in % | Wuchshemmung in % |
|---|---|---|
| – (Kontrolle) | – | 0 |
| "Off-Shoot-T" (R) (bekannt) | 0,2 | 20 |
| 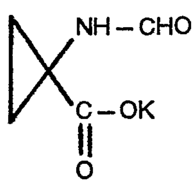 (2) | 0,2 | 64 |

Beispiel B

Wuchshemmung bei Gerste

Lösungsmittel: 30 Gewichtsteile Dimethylformamid
Emulgator: 1 Gewichtsteil Polyoxyäthylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Gerstepflanzen werden im Gewächshaus bis zum 2-Blatt-Stadium angezogen. In diesem Stadium werden die Pflanzen tropfnaß mit den Wirkstoffzubereitungen besprüht. Nach 3 Wochen wird bei allen Pflanzen der Zuwachs gemessen und die Wuchshemmung in % des Zuwachses der Kontrollpflanzen berechnet. Es bedeuten 100% den Stillstand des Wachstums und 0% ein Wachstum entsprechend dem der Kontrollpflanzen.

Wirkstoffe, Wirkstoffkonzentrationen und Resultate gehen aus der nachfolgenden Tabelle hervor.

TABELLE B

Wuchshemmung bei Gerste

| Wirkstoff | Wirkstoffkonzentration in % | Wuchshemmung in % |
|---|---|---|
| — (Kontrolle) | — | 0 |
| 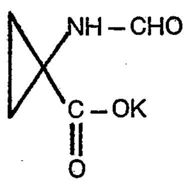 (2) | 0,05 | 25 |
| 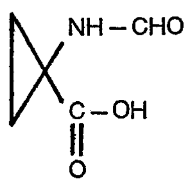 (3) | 0,05 | 30 |

Beispiel C

Wuchshemmung bei Weizen

Lösungsmittel: 30 Gewichtsteile Dimethylformamid
Emulgator: 1 Gewichtsteil Polyoxyäthylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Weizenpflanzen werden im Gewächshaus bis zum 2-Blatt-Stadium angezogen. In diesem Stadium werden die Pflanzen tropfnaß mit den Wirkstoffzubereitungen besprüht. Nach 3 Wochen wird bei allen Pflanzen der Zuwachs gemessen und die Wuchshemmung in % des Zuwachses der Kontrollpflanzen berechnet. Es bedeuten 100% den Stillstand des Wachstums und 0% ein Wachstum entsprechend dem der Kontrollpflanzen.

Wirkstoffe, Wirkstoffkonzentrationen und Resultate gehen aus der nachfolgenden Tabelle hervor.

TABELLE C

Wuchshemmung bei Weizen

| Wirkstoff | Wirkstoffkonzentration in % | Wuchshemmung in % |
|---|---|---|
| – (Kontrolle) | – | 0 |
| 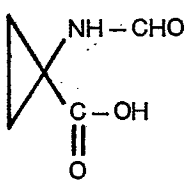 (3) | 0,05 | 45 |
| 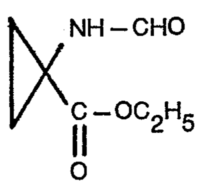 (11) | 0,05 | 30 |

Beispiel D

Wuchshemmung bei Sojabohnen

Lösungsmittel: 30 Gewichtsteile Dimethylformamid
Emulgator: 1 Gewichtsteil Polyoxyäthylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Sojabohnenpflanzen werden im Gewächshaus bis zur vollen Entfaltung des ersten Folgeblattes angezogen. In diesem Stadium werden die Pflanzen tropfnaß mit den Wirkstoffzubereitungen besprüht. Nach 3 Wochen wird bei allen Pflanzen der Zuwachs gemessen und die Wuchshemmung in % des Zuwachses der Kontrollpflanzen berechnet. Es bedeuten 10% den Stillstand des Wachstums und 0% ein Wachstum entsprechend dem der Kontrollpflanzen.

Wirkstoffe, Wirkstoffkonzentrationen und Resultate gehen aus der nachfolgenden Tabelle hervor.

TABELLE D

Wuchshemmung bei Sojabohnen

| Wirkstoff | Wirkstoffkonzentration in % | Wuchshemmung in % |
|---|---|---|
| – (Kontrolle) | – | 0 |
| $Cl-CH_2-CH_2-\overset{\oplus}{N}(CH_3)_3\ Cl$ (bekannt) | 0,05 | 0 |
| 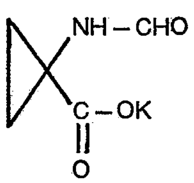 (2) | 0,05 | 85 |
| 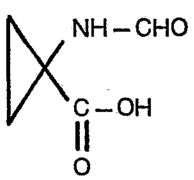 (3) | 0,05 | 75 + |
| 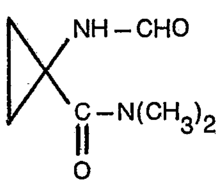 (4) | 0,05 | 25 |

+) Pflanzen zeigen eine dunkelgrüne Färbung

Beispiel E

Reifebeschleunigung bei Tomaten

Lösungsmittel: 30 Gewichtsteile Dimethylformamid
Emulgator: 1 Gewichtsteil Polyoxyäthylensorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Tomaten werden im Gewächshaus in üblicher Weise angezogen, bis etwa 30% der Früchte reif sind. In diesem Stadium werden die Pflanzen bis zum Abtropfen mit den Wirkstoffzubereitungen besprüht. Nach verschiedenen Zeitintervallen wird die Anzahl der reifen Früchte bei den einzelnen Versuchsgliedern ermittelt und in Prozent der Gesamtzahl der Früchte des betreffenden Versuchsgliedes berechnet. Somit bedeutet 100%, daß alle Früchte reif sind.

Aus der nachfolgenden Tabelle gehen die Resultate dieses Versuches hervor.

TABELLE E

Reifebeschleunigung bei Tomaten

| Wirkstoff | Wirkstoffkonzentration in % | Reife Früchte in % nach 2 Tagen | 4 Tagen | 7 Tagen |
|---|---|---|---|---|
| – (Kontrolle) | – | 37 | 40 | 44 |
| 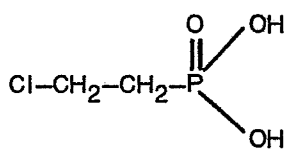 (bekannt) | 0,1 | 46 | 57 | 79 |
| 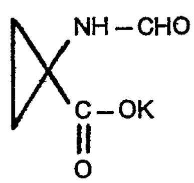 (2) | 0,1 | 53 | 65 | 86 |

Beispiel F

Stimulation der Äthylenbiosynthese

Lösungsmittel: 30 Gewichtsteile Dimethylformamid
Emulgator: 1 Gewichtsteil Polyoxyäthylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Aus Sojabohnenblättern werden Blattstücke gleicher Größe gestanzt. In Petrischalen, die mit 10 ml der Wirkstoffzubereitungen bzw. entsprechender Kontroll-lösungen ohne Wirkstoffe gefüllt sind, wird jeweils eine konstante Zahl Blattstücke 1 Stunde lang inkubiert. Anschließend werden die Blattstücke zusammen mit 1 ml der jeweiligen Wirkstoffzubereitung bzw. Kontrollösung in luftdicht abgeschlossene Gefäße gegeben. Nach 24 Stunden wird das Äthylen, das sich in den Gefäßen angesammelt hat, mit üblichen Nachweismethoden bestimmt. Die Äthylenentwicklung der mit Wirkstoffzubereitung behandelten Blattstücke wird mit der Äthylenentwicklung der Kontrollen verglichen.

In der nachfolgenden Tabelle bedeuten:

- 0 keine Wirkung
- \+ schwache Stimulation der Äthylenbiosynthese
- ++ mittlere Stimulation der Äthylenbiosynthese
- +++ starke Stimulation der Äthylenbiosynthese

Dieser Test ist in besonderem Maße geeignet, die wachstumsregulierenden Eigenschaften der erfindungsgemäßen Verbindungen zu verdeutlichen.

Das Pflanzenhormon Äthylen greift in zahlreiche Prozesse bei der Entwicklung der Pflanzen ein. Eine Erhöhung der Äthylenbiosynthese, wie sie mit den erfindungsgemäßen Substanzen erzielt werden kann, erlaubt es, diese Prozesse zu steuern. Als Beispiele, für die ein besonderes kommerzielles Interesse besteht, seien hier genannt: Fruchtablösung, Reifebeschleunigung von Früchten und Blättern, Blühinduktion, Samenkeimung, Fruchtausdünnung, Stimulation des Latexflusses z.B. bei Hevea, Geschlechtsbeeinflußung und Wuchshemmung z.B. auch um das Lagern von Getreide zu verhindern.

Die Wirkstoffe und die Resultate gehen aus der nachfolgenden Tabelle hervor.

TABELLE F

Stimulation der Äthylenbiosynthese

| Wirkstoff | Wirkstoffkonzentration in % | Wirkung |
|---|---|---|
| – (Kontrolle) | – | 0 |
| $Cl-CH_2-CH_2-\overset{\oplus}{N}(CH_3)_3\ Cl^{\ominus}$ (bekannt) | 0,001 | 0 |
| 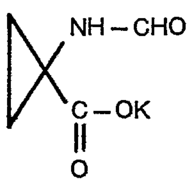 (2) | 0,001 | ++ |
| 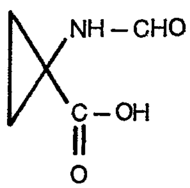 (3) | 0,001 | +++ |
| 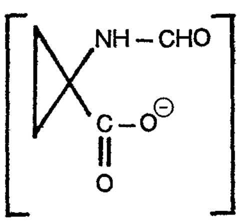 $Ca^{2\oplus}$ (5) | 0,001 | + |
| 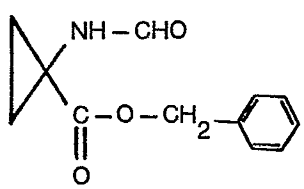 (8) | 0,001 | + |
| 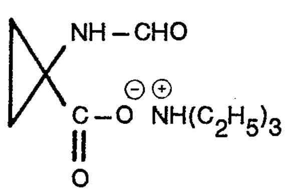 (10) | 0,001 | ++ |

TABELLE F (Fortsetzung)

| Wirkstoff | Wirkstoffkonzentration in % | Wirkung |
|---|---|---|
| 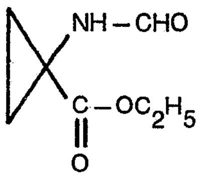 (11) | 0,001 | + |
| 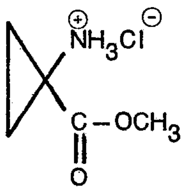 (14) | 0,001 | +++ |
| 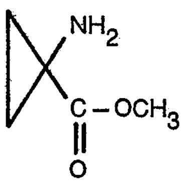 (15) | 0,001 | +++ |
| 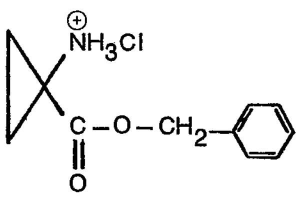 (16) | 0,001 | +++ |
| 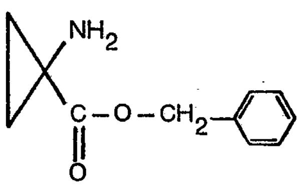 (17) | 0,001 | +++ |
| 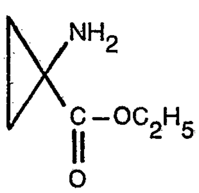 (21) | 0,001 | +++ |

TABELLE F (Fortsetzung)

| Wirkstoff | Wirkstoffkonzentration in % | Wirkung |
|---|---|---|
| 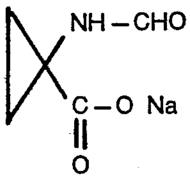 (26) | 0,001 | ++ |
| 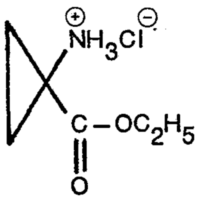 (20) | 0,001 | +++ |
| 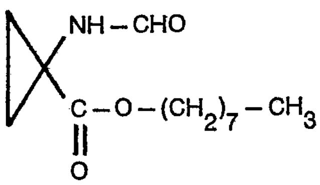 (24) | 0,001 | +++ |
| 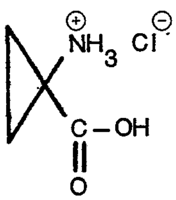 (6) | 0,001 | +++ |
| 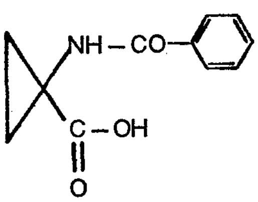 (7) | 0,001 | ++ |
| 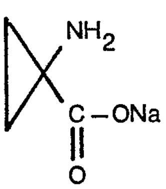 (18) | 0,001 | +++ |

TABELLE F (Fortsetzung)

| Wirkstoff | Wirkstoffkonzentration in % | Wirkung |
|---|---|---|
| 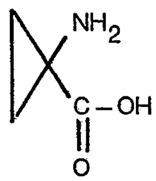 (19) | 0,001 | +++ |
| 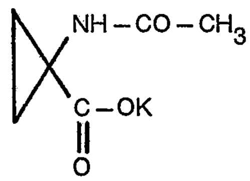 (22) | 0,001 | +++ |
| 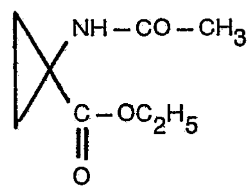 (23) | 0,001 | +++ |

## Herstellungsbeispiele

Beispiel 1: 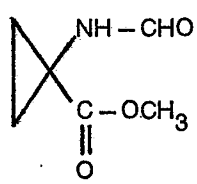

Zu 40 ml Wasser werden bei 20°C nacheinander 0,3 ml konzentrierte Salzsäure und eine Lösung von 5 g (0,04 Mol) α-Isocyano-cyclopropancarbonsäure-methylester in 10 ml Methanol gegeben. Die Reaktionsmischung wird 6 Stunden gerührt. Dann extrahiert man zweimal mit je 50 ml Methylenchlorid, trocknet die organische Phase über Magnesiumsulfat, filtriert dund destilliert das Lösungsmittel im Vakuum ab. Als Rückstand verbleiben in Form einer farblosen Flüssigkeit 4 g (70% der Theorie) α-Formylamino-cyclopropancarbonsäure-methyl-ester.
Brechungsindex: $n_D^{20} = 1,4730$.

Beispiel 2: 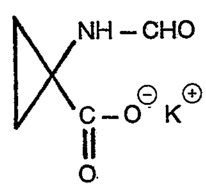

Eine Lösung von 7 g (0,05 Mol) α-Isocyano-cyclopropancarbonsäure-äthylester in 100 ml Äther wird bei 5°C tropfenweise mit einer Lösung von 3,1 g (0,55 Mol) Kaliumhydroxid in 50 ml Äthanol versetzt. Die Mischung wird 12 Stunden bei 20°C gerührt. Nach Absaugen und Waschen mit Äther erhält man als weißes Pulver 6,4 g (86% der Theorie) α-Isocyano-cyclopropancarbonsäure-Kaliumsalz. Schmelzpunkt: 225°C.

Eine Suspension von 9 g (0,06 Mol) α-Isocyano-cyclopropan-carbonsäure-Kaliumsalz in 50 ml Äthanol wird mit 1,18 g (0,066 Mol) Wasser versetzt. Die Mischung wird 12 Stunden unter Rückfluß zum Sieden erhitzt und nach dem Abkühlen bei 20°C mit 50 ml Äther versetzt. Nach Absaugen erhält

man 7 g (70% der Theorie) α-Formylaminocyclopropancarbonsäure-Kaliumsalz in Form weißer Kristalle. Schmelzpunkt: 186°C.

Beispiel 3:

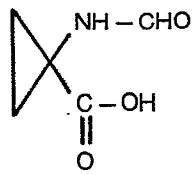

8,36 g (0,05 Mol) α-Formylamino-cyclopropancarbonsäure-Kaliumsalz werden in 20 ml Wasser gelöst und bei 0°C mit 5 g (0,05 Mol) konzentrierter Salzsäure versetzt. Die Mischung wird über Nacht bei 5°C stehen gelassen. Nach Absaugen und Trocknen erhält man in Form farbloser Kristalle 5,2 g (80% der Theorie) α-Formylamino-cyclopropancarbonsäure.
Schmelzpunkt: 189°C.

Beispiel 4:

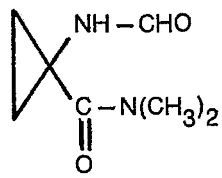

Zu einer Lösung von 6,7 g (0,15 Mol) Dimethylamin in 50 ml Wasser gibt man bei 20°C unter Rühren 7,46 g (0,05 Mol) α-Isocyano-cyclopropancarbonsäure-Kaliumsalz. Nach Abkühlen auf 5°C wird die Reaktionsmischung mit 5 g (0,05 Mol) konzentrierter Salzsäure versetzt und im verschlossenen Reaktionsgefäß 12 Stunden bei 20°C stehen gelassen. Bei einer Badtemperatur von 60°C werden die flüchtigen Komponenten im Wasserstrahlvakuum abgezogen. Aus dem Rückstand wird das Produkt mit Methylenchlorid extrahiert; die Lösung wird mit Magnesiumsulfat getrocknet und nach Filtration wird das Lösungsmittel im Vakuum abdestilliert. Es verbleiben 5,5 g (70% der Theorie) α-Formylamino-cyclopropancarbonsäure-N,N-dimethylamid in Form einer hellgelben Flüssigkeit.
Brechungsindex: $n_D^{20} = 1{,}4350$.

Beispiel 5:

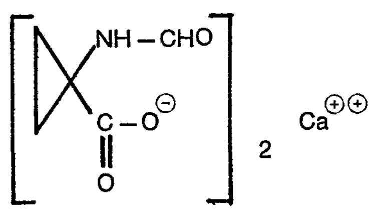

Eine Mischung aus 2,5 g (0,02 Mol) α-Formylaminocyclopropancarbonsäure und 40 ml Äthanol wird unter Rühren bei 25°C mit 0,74 g (0,01 Mol) Calciumhydroxid versetzt und man läßt anschließend 12 Stunden bei Raumtemperatur nachrühren. Die Lösung wird anschließend im Vakuum eingedampft und der Rückstand mit Äther verrieben. Nach Absaugen und Trocknen erhält man in Form eines weißen Pulvers 2,6 g (97% der Theorie) α-Formylamino-cyclopropancarbonsäure-Calciumsalz.
Schmelzpunkt: 290°C.

Beispiel 6:

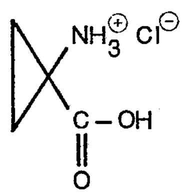

Eine Mischung aus 19,4 g (0,15 Mol) α-Formylaminocyclopropan-carbonsäure und 200 ml 18%iger Salzsäure wird 3 Stunden unter Rückfluß zum Sieden erhitzt. Anschließend wird im Vakuum zur Trockne eingedampft und der zurückbleibende Feststoff über Phosphorpentoxid im Vakuumexsikkator getrocknet.
Ausbeute: 18 g (92% der Theorie) α-Amino-cyclopropancarbonsäure-hydrochlorid.
Schmelzpunkt: 232°C.

Beispiel 7:

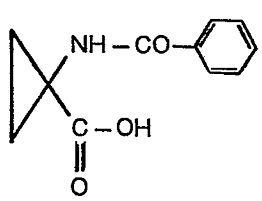

Eine Mischung aus 2 g (0,02 Mol) α-Amino-cyclopropancarbonsäure, 25 ml Wasser und 2,55 g (0,044 Mol) Kaliumhydroxid wird unter Rühren bei 20°C mit 3,1 g (0,022 Mol) Benzoylchlorid versetzt. Nach 30 minütigem Rühren wird mit konzentrierter Salzsäure auf pH 1 angesäuert und abgesaugt. Zur Reinigung wird das Produkt mit 30 ml Wasser ausgekocht.
Ausbeute: 2,1 g (51% der Theorie) α-Benzoylaminocyclopropancarbonsäure.
Schmelzpunkt 209°C.

Analog einem der Beispiele 1 bis 7 können die in der nachstehenden Tabelle aufgeführten Verbindungen der Formel I

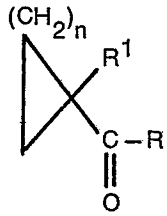

(I)

hergestellt werden:

| Beispiel Nr. | n | R | $R^1$ | Ausbeute (% der Theorie) | Brechungsindex $n_D^{20}$; Schmelzpunkt (°C); bzw. Siedepunkt (°C/mbar) |
|---|---|---|---|---|---|
| 8 | 1 | $OCH_2$– 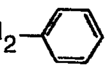 | NHCHO | 74 | 1,5079 |
| 9 | 2 | $O^{\ominus}K^{\oplus}$ | NHCHO | 31 | 100 (Z) |
| 10 | 1 | $O^{\ominus}\ HN(C_2H_5)_3^{\oplus}$ | NHCHO | 85 | 1,4461 |
| 11 | 1 | $OC_2H_5$ | NHCHO | 71 | 110/0,1 |
| 12 | 1 | $NH_2$ | NHCHO | 70 | 145 |
| 13 | 2 | $OC_2H_5$ | NHCHO | 24 | 65/4 |
| 14 | 1 | $OCH_3$ | $NH_3^{\oplus}Cl^{\ominus}$ | 81 | 180 |
| 15 | 1 | $OCH_3$ | $NH_2$ | 77 | 1,4491 |
| 16 | 1 | $OCH_2$– 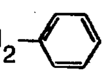 | $NH_3^{\oplus}Cl^{\ominus}$ | 51 | 92 |
| 17 | 1 | $OCH_2$– 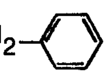 | $NH_2$ | 86 | 1,4849 |
| 18 | 1 | $O^{\ominus}\ Na^{\oplus}$ | $NH_2$ | 97 | 216 |
| 19 | 1 | OH | $NH_2$ | 75 | 220 |
| 20 | 1 | $OC_2H_5$ | $NH_3^{\oplus}Cl^{\ominus}$ | 83 | 108 |
| 21 | 1 | $OC_2H_5$ | $NH_2$ | 75 | 1,4440 |
| 22 | 1 | $O^{\ominus}\ K^{\oplus}$ | $NHCOCH_3$ | 82 | 246 |
| 23 | 1 | $OC_2H_5$ | $NHCOCH_3$ | 90 | 76 |
| 24 | 1 | $O(CH_2)_7CH_3$ | NHCHO | 95 | 1,4321 |
| 25 | 1 | $O(CH_2)_7CH_3$ | $NH_3^{\oplus}Cl^{\ominus}$ | 91 | 1,4429 |
| 26 | 1 | $O^{\ominus}Na^{\oplus}$ | NHCHO | 90 | 221 |
| 27 | 1 | $OC_4H_9$-tert. | $NH_3^{\oplus}Cl^{\ominus}$ | 73 | 108 |

**Patentansprüche**

1. Mittel zur Regulierung des Pflanzenwachstums, gekennzeichnet durch einen Gehalt an mindestens einem Cycloalkancarbonsäure-Derivat der Formel

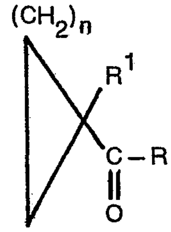

(I)

in welcher

R für Hydroxy, Alkoxy, Aralkoxy, Amino, Alkylamino, Dialkylamino oder für den Rest

$O^{\ominus}M^{\oplus}$

steht, wobei $M^{\oplus}$ für ein Alkali- oder Erdalkalimetallionenäquivalent oder für ein Ammonium-, Alkylammonium-, Dialkylammonium-, Trialkylammonium- oder Tetraalkylammonium steht,

$R^1$ für Amino, oder für den Rest

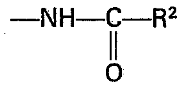

worin $R^2$ für Wasserstoff, Alkyl oder Aryl steht, und $R^1$ ferner für den Rest $—\overset{\oplus}{N}H_3\ X^{\ominus}$ steht, wobei $X^{\ominus}$ für Chlorid, Bromid, oder Jodid steht, und

n für 1 bis 5 steht.

2. Verwendung von Cycloalkancarbonsäure-Derivaten gemäß Anspruch 1 zur Regulierung des Pflanzenwachstums.

3. Cycloalkancarbonsäure-Derivate der Formel

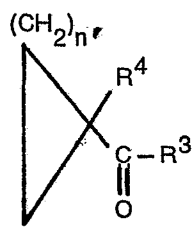

(Ia)

in welcher

$R^3$ für Alkoxy mit 1 bis 20 Kohlenstoffatomen, Benzyloxy, Amino, Alkylamino mit 1 bis 4 Kohlenstoffatomen, Dialkylamino mit 1 bis 4 Kohlenstoffatomen je Alkylrest oder für den Rest

$O^{\ominus}M^{\oplus}$

steht, wobei $M^{\oplus}$ für ein Natrium- oder Kaliumion, ein Magnesium- oder Calciumionenäquivalent, Ammonium, Alkylammonium mit 1 bis 4 Kohlenstoffatomen, Dialkylammonium, Trialkylammonium oder Tetraalkylammonium mit jeweils 1 bis 4 Kohlenstoffatomen je Alkylrest steht,

$R^4$ für Amino oder den Rest

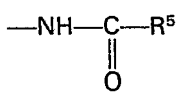

steht, worin

$R^5$ für Wasserstoff steht, wenn $R^3$ nicht für Ethoxy steht, ferner für Alkyl mit 1 bis 4 Kohlenstoffatomen, steht, jedoch nicht für Methyl, wenn $R^3$ für Methoxy steht, und $R^5$ außerdem für Phenyl steht, und

$R^4$ weiterhin für $—\overset{\oplus}{N}H_3\ Cl^{\ominus}$ steht, sofern $R^3$ nicht für Ethoxy steht, und

n′ für 1 oder 2 steht.

4. Verfahren zur Herstellung von Cycloalkancarbonsäure-Derivaten der Formel

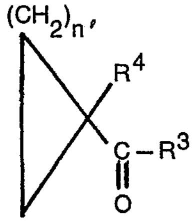

(Ia)

in welcher

$R^3$ für Alkoxy mit 1 bis 20 Kohlenstoffatomen, Benzyloxy, Amino, Alkylamino mit 1 bis 4 Kohlenstoffatomen, Dialkylamino mit 1 bis 4 Kohlenstoffatomen je Alkylrest oder für den Rest

$O^{\ominus}M^{\oplus}$

steht, wobei $M^{\oplus}$ für ein Natrium- oder Kaliumion, ein Magnesium- oder Calciumionenäquivalent, Ammonium, Alkylammonium mit 1 bis 4 Kohlenstoffatomen, Dialkylammonium, Trialkylammonium oder Tetraalkylammonium mit jeweils 1 bis 4 Kohlenstoffatomen je Alkylrest steht,

$R^4$ für Amino oder den Rest

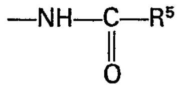

steht, worin

$R^5$ für Wasserstoff steht, wenn $R^3$ nicht für Ethoxy steht, ferner für Alkyl mit 1 bis 4 Kohlenstoffatomen steht, jedoch nicht für Methyl, wenn $R^3$ für Methoxy steht, und $R^5$ außerdem für Phenyl steht, und

$R^4$ weiterhin für $-\overset{\oplus}{N}H_3\ Cl^{\ominus}$ steht, sofern $R^3$ nicht für Ethoxy steht, und

n' für 1 oder 2 steht,

dadurch gekennzeichnet, daß man

a) zur Herstellung derjenigen Cycloalkancarbonsäure-Derivate der Formel (Ia), in denen $R^4$ für Formylamino steht,

$\alpha$-Isocyano-cycloalkancarbonsäure-Derivate der Formel

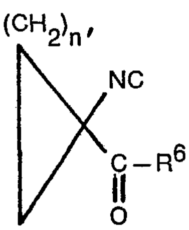

(II)

in welcher

$R^6$ für Alkoxy mit 1 bis 20 Kohlenstoffatomen, — ausgenommen Ethoxy —, Benzyloxy, Amino, Alkylamino mit 1 bis 4 Kohlenstoffatomen, Dialkylamino mit 1 bis 4 Kohlenstoffatomen je Alkylrest oder für den Rest $O^{\ominus}M^{\oplus}$ steht, worin $M^{\oplus}$ die oben angegebene Bedeutung hat und

n' die oben angegebene Bedeutung hat,

gegebenenfalls in Gegenwart eines Katalysators und gegebenenfalls in Gegenwart eines zusätzlichen Verdünnungsmittels mit Wasser hydrolysiert.

b) zur Herstellung derjenigen Cycloalkancarbonsäure-Derivate der Formel (Ia), in denen $R^4$ für Formylamino steht und $R^3$ für OM steht, wobei $M^{\oplus}$ für ein Natrium- oder Kaliumion steht,

$\alpha$-Isocyano-cycloalkancarbonsäure-Derivate der Formel

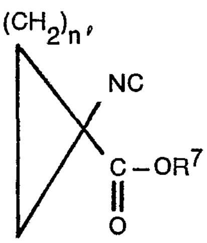

(III)

in welcher

$R^7$ für Alkyl mit 1 bis 13 Kohlenstoffatomen steht, und

n' die oben angegebene Bedeutung hat,

unter schonenden Bedingungen, gegebenenfalls in Gegenwart eines zusätzlichen Verdünnungsmittels,

mit Natrium- oder Kaliumhydroxid umsetzt und die dabei entstehenden $\alpha$-Isocyano-carbonsäure-Salze der Formel

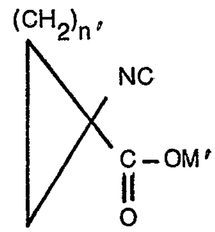

(IV)

in welcher

M' für ein Natrium- oder Kaliumion steht und

n' die oben angegebene Bedeutung hat,

durch Kochen mit wäßrigem Alkohol hydrolysiert,

c) zur Herstellung derjenigen Cycloalkancarbonsäure-Derivate der Formel (Ia), in denen $R^4$ für Formylamino steht und $R^3$ für OM steht, wobei M für die angegebenen Reste, jedoch nicht für ein Natrium-oder Kaliumion steht,

gemäß Verfahren (b) herstellbare $\alpha$-Formylaminocycloalkancarbonsäure-Salze der Formel

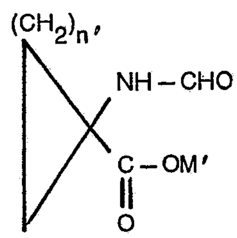

(Ib)

in welcher

M' und n' die oben angegebene Bedeutung haben,

gegebenenfalls in Gegenwart eines Verdünnungsmittels mit einer äquivalenten Menge einer starken Säure behandelt und die dabei entstehenden $\alpha$-Formylaminocycloalkancarbonsäuren der Formel

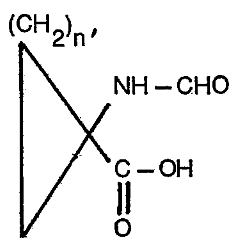

(Ic)

in welcher

n' die oben angegebene Bedeutung hat,

mit Verbindungen der Formel

$$M''OR^8 \quad (V)$$

in welcher

M'' für ein Magnesium- oder Calciumionenäquivalent, für Ammonium, Alkylammonium mit 1 bis 4 Kohlenstoffatomen, Dialkylammonium, Trialkylammonium oder Tetraalkylammonium mit jeweils 1 bis 4 Kohlenstoffatomen je Alkylrest steht, und

$R^8$ für Wasserstoff, Methyl oder Äthyl steht, gegebenenfalls in Gegenwart eines Verdünnungsmittels umsetzt,

d) zur Herstellung derjenigen Cycloalkancarbonsäure-Derivate der Formel (Ia), in denen $R^4$ für Formylamino steht und $R^3$ für Amino, Alkylamino mit 1 bis 4 Kohlenstoffatomen oder Dialkylamino mit 1 bis 4 Kohlenstoffatomen je Alkylrest steht,

gemäß Verfahren (b) herstellbare $\alpha$-Isocyano-carbonsäure-Salze der Formel

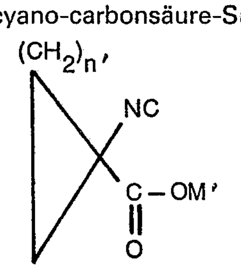

(IV)

in welcher

M′ und n′ die oben angegebene Bedeutung haben, mit Verbindung der Formel

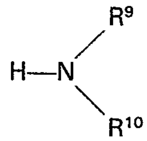
(VI)

in welcher

$R^9$ und $R^{10}$ gleich oder verschieden sind und für Wasserstoff oder Alkyl mit 1 bis 4 Kohlenstoffatomen stehen, in Gegenwart von Salzsäure sowie gegebenenfalls in Gegenwart eines Verdünnungsmittels umsetzt,

e) zur Herstellung derjenigen Verbindungen der Formel (Ia), in denen $R^3$ für Alkoxy mit 1 bis 20 Kohlenstoffatomen oder Benzyloxy steht und $R^4$ für den Rest $—\overset{\oplus}{N}H_3Cl^{\ominus}$ steht, — sofern $R^3$ nicht für Ethoxy steht —,

gemäß Verfahren (a) herstellbare $\alpha$-Formylaminocycloalkancarbonsäure-Derivate der Formel

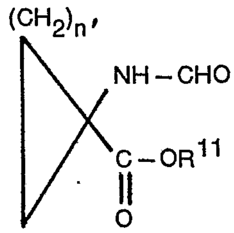
(Id)

in welcher

$R^{11}$ für Alkyl mit 1 bis 20 Kohlenstoffatomen oder Benzyl steht und

n′ die oben angegebene Bedeutung hat,

mit Chlorwasserstoff der Formel

$$HCl \qquad (VII)$$

gegebenenfalls in Gegenwart eines Verdünnungsmittels umsetzt,

f) zur Herstellung derjenigen Cycloalkancarbonsäure-Derivate der Formel (Ia), in denen $R^4$ für den Rest —NH—CO—$R^5$ steht,

$\alpha$-Aminocycloalkancarbonsäure-Derivate der Formel

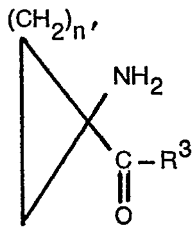
(Ie)

in welcher

$R^3$ und n′ oben angegebene Bedeutung haben,

mit Acylierungsmitteln der Formel

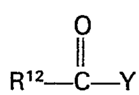
(VIII)

in welcher

$R^{12}$ für Wasserstoff, Alkyl mit 1 bis 4 Kohlenstoffatomen oder Phenyl steht, und

Y für Chlor oder für den Rest —O—CO—$R^{12}$ steht, in welchem $R^{12}$ die vorgenannte Bedeutung hat,

in Gegenwart eines Säureakzeptors sowie gegebenenfalls in Gegenwart eines Verdünnungsmittels umsetzt,

g) zur Herstellung derjenigen Cycloalkancarbonsäure-Derivate der Formel (Ia), in denen $R^4$ für Amino steht,

$\alpha$-Amino-cycloalkancarbonsäure-chloride der Formel

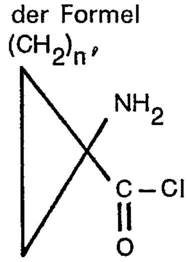
(IX)

in welcher

n′ die oben angegebene Bedeutung hat,

mit Verbindungen der Formel

$$R^3H \qquad (X)$$

in welcher

$R^3$ die oben angegebene Bedeutung hat,

gegebenenfalls in Gegenwart eines Säurebindemittels sowie gegebenenfalls in Gegenwart eines Verdünnungsmittels umsetzt.

## Claims

1. Plant growth regulators, characterised in that they contain at least one cycloalkane carboxylic acid derivative corresponding to the following formula

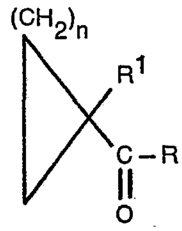

(I)

in which

R represents hydroxy, alkoxy, aralkoxy, amino, alkylamino, dialkylamino or the radical

$$O^{\ominus}M^{\oplus}$$

where $M^{\oplus}$ is an alkali or alkaline-earth metal ion equivalent or an ammonium, alkylammonium, dialkylammonium, trialkyl ammonium or tetra-alkyl ammonium ion,

$R^1$ represents amino or the radical

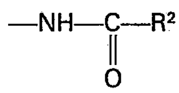

where $R^2$ represents hydrogen, alkyl or aryl; in addition $R^1$ represents the radical

$$-\overset{\oplus}{N}H_3X^{\ominus}$$

where $X^{\ominus}$ represents chloride, bromide or iodide, and $n = 1$ to 5.

2. The use of the cycloalkane carboxylic acid derivatives claimed in Claim 1 for regulating plant growth.

3. Cycloalkane carboxylic acid derivatives corresponding to the following formula

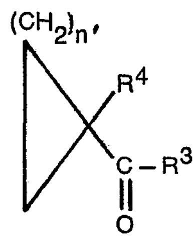

(Ia)

in which

$R^3$ represents alkoxy containing from 1 to 20 C-atoms, benzyloxy, amino, alkylamino containing from 1 to 4 C-atoms, dialkylamino containing from 1 to 4 C-atoms per alkyl radical or the radical

$$O^{\ominus}M^{\oplus}$$

in which $M^{\oplus}$ represents a sodium or potassium ion, a magnesium or calcium ion equivalent, ammonium, alkyl ammonium containing from 1 to 4 C-atoms, dialkyl ammonium, trialkyl ammonium or tetra-alkyl ammonium containing from 1 to 4 C-atoms per alkyl radical,

$R^4$ represents amino or the radical

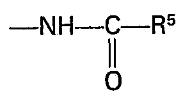

in which $R^5$ represents hydrogen unless $R^3$ is ethoxy, also alkyl containing from 1 to 4 C-atoms but not methyl where $R^3$ is methoxy, and phenyl, in addition to which

$R^4$ represents

$$-\overset{\oplus}{N}H_3Cl^{\ominus}$$

unless $R^3$ is ethoxy, and $n'$ = 1 or 2.

4. A process for the production of cycloalkane carboxylic acid derivatives corresponding to the following formula

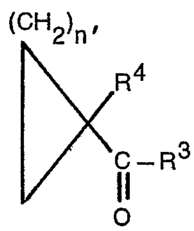

(Ia)

in which

$R^3$ represents alkoxy containing from 1 to 20 C-atoms, benzyloxy, amino, alkylamino containing from 1 to 4 C-atoms, dialkylamino containing from 1 to 4 C-atoms per alkyl radical or the radical

$$O^{\ominus}M^{\oplus}$$

in which $M^{\oplus}$ represents a sodium or potassium ion, a magnesium or calcium ion equivalent, ammonium, alkyl ammonium containing from 1 to 4 C-atoms, dialkyl ammonium, trialkyl ammonium or tetra-alkyl ammonium containing from 1 to 4 C-atoms per alkyl radical,

$R^4$ represents amino or the radical

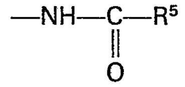

in which $R^5$ represents hydrogen unless $R^3$ is ethoxy, also alkyl containing from 1 to 4 C-atoms but not methyl where $R^3$ is methoxy, and phenyl, in addition to which

$R^4$ represents

$$-\overset{\oplus}{N}H_3Cl^{\ominus}$$

unless $R^3$ is ethoxy, and $n'$ = 1 or 2, characterised in that

a) to produce those cycloalkane carboxylic acid derivatives of formula (Ia) in which $R^4$ represents formylamino,

$\alpha$-isocyano-cycloalkane carboxylic acid derivatives corresponding to the following formula

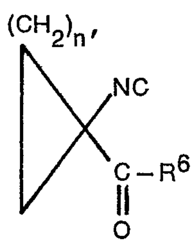

(II)

in which

$R^6$ represents alkoxy containing from 1 to 20 C-atoms (except ethoxy), benzyloxy, amino, alkylamino containing from 1 to 4 C-atoms, dialkylamino containing from 1 to 4 C-atoms per alkyl radical or the radical

$$O^{\ominus}M^{\oplus}$$

where $M^{\oplus}$ is as defined above, and

$n'$ is as defined above, are hydrolysed with water optionally in the presence of a catalyst and optionally in the presence of an additional diluent,

b) to produce those cycloalkane carboxylic acid derivatives of formula (Ia) in which $R^4$ represents formylamino and $R^3$ represents OM where $M^{\oplus}$ represents a sodium or potassium ion,

α-isocyano-cycloalkane carboxylic acid derivatives corresponding to the following formula

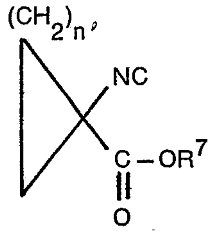

(III)

in which

$R^7$ represents alkyl containing from 1 to 13 C-atoms and

*n'* is as defined above, are reacted with sodium or potassium hydroxide under mild conditions, optionally in the presence of an additional diluent, and the α-isocyano-carboxylic acid salts formed corresponding to the following formula

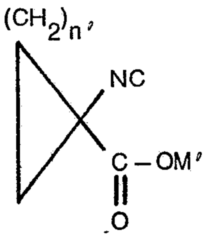

(IV)

in which

M' represents a sodium or potassium ion and

*n'* is as defined above, are hydrolysed by boiling with aqueous alcohol,

c) to produce those cycloalkane carboxylic acid derivatives of formula (Ia) in which $R^4$ represents formylamino and $R^3$ represents OM where M represents the radicals indicated, but not a sodium or potassium ion,

α-formylamino-cycloalkane carboxylic acid salts obtainable by method b) and corresponding to the following formula

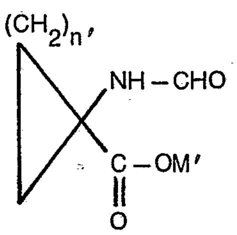

(Ib)

in which

M' and *n'* are as defined above, are treated with an equivalent quantity of a strong acid, optionally in the presence of a diluent, and the α-formylamino-cycloalkane carboxylic acids formed corresponding to the following formula

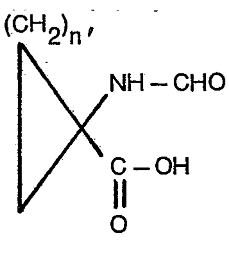

(Ic)

in which

*n'* is as defined above, are reacted with compounds corresponding to the following formula

$$M''OR^8 \qquad (V)$$

in which

M'' represents a magnesium or calcium ion equivalent, ammonium alkyl ammonium containing from 1 to 4 C-atoms, dialkyl ammonium, trialkyl ammonium or tetra-alkyl ammonium containing from 1 to 4 C-atoms per alkyl radical, and

$R^8$ represents hydrogen, methyl or ethyl, optionally in the presence of a diluent,

d) to produce those cycloalkane carboxylic acid derivatives of formula (Ia) in which $R^4$ represents formylamino and $R^3$ represents amino, alkylamino containing from 1 to 4 C-atoms or dialkylamino containing from 1 to 4 C-atoms per alkyl radical,

$\alpha$-isocyano-carboxylic acid salts obtainable by method b) and corresponding to the following formula

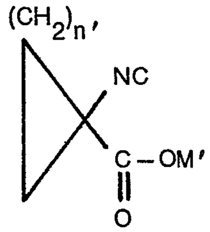

(IV)

in which

M′ and $n'$ are as defined above, are reacted with compounds corresponding to the following formula

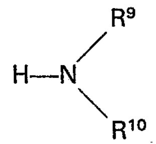

(VI)

in which

$R^9$ and $R^{10}$ may be the same or different and represent hydrogen or $C_{1-4}$-alkyl, in the presence of hydrochloric acid and optionally in the presence of a diluent,

e) to produce those compounds of formula (Ia) in which $R^3$ represents $C_{1-20}$-alkoxy or benzyloxy and $R^4$ represents the radical

$$\overset{\oplus}{—NH_3}Cl^{\ominus}$$

unless $R^3$ is ethoxy,

$\alpha$-formylamino-cycloalkane carboxylic acid derivatives corresponding to the following formula

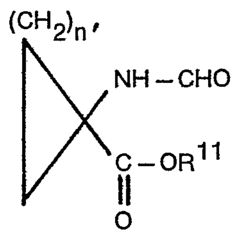

(Id)

in which

$R^{11}$ represents $C_{1-20}$-alkyl or benzyl and $n'$ is as defined above, and obtainable by method a) are reacted with hydrogen chloride corresponding to the formula

$$HCl \qquad (VII)$$

optionally in the presence of a diluent,

f) to produce those cycloalkane carboxylic acid derivatives of formula (Ia) in which $R^4$ represents the radical —NH—CO—$R^5$,

$\alpha$-amino-cycloalkane carboxylic acid derivatives corresponding to the following formula

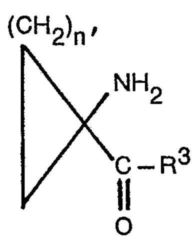

(Ie)

in which

$R^3$ and $n'$ are as defined above, are reacted with acylating agents corresponding to the following formula

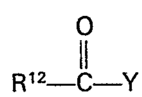

(VIII)

in which

$R^{12}$ represents hydrogen, $C_{1-4}$-alkyl or phenyl and

Y represents chlorine or the radical —O—CO—$R^{12}$ where

$R^{12}$ is as defined above, in the presence of an acid acceptor and optionally in the presence of a diluent,

g) to produce those cycloalkane carboxylic acid derivatives of formula (Ia) in which $R^4$ represents amino, $\alpha$-amino-cycloalkane carboxylic acid chlorides corresponding to the following formula

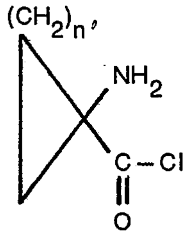

(IX)

in which

$n'$ is as defined above,

are reacted with compounds corresponding to the following formula

$$R^3H \qquad (X)$$

in which

$R^3$ is as defined above, optionally in the presence of an acid-binding agent and optionally in the presence of a diluent.

**Revendications**

1. Produit régulateur de la croissance des végétaux, caractérisé en ce qu'il contient au moins un dérivé d'acide cycloalcanecarboxylique de formule:

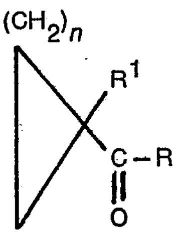

(I)

dans laquelle:

R représente un groupe hydroxy, alcoxy, aralcoxy, amino, alkylamino, dialkylamino ou le reste

$$O^{\ominus}M^{\oplus}$$

dans lequel $M^{\oplus}$ représente un équivalent d'ion de métal alcalin ou alcalino-terreux ou un ion ammonium, alkylammonium, dialkylammonium, trialkylammonium ou tétraalkylammonium,

$R^1$ représente un groupe amino ou le reste

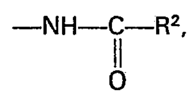

$R^2$ représentant l'hydrogène, un groupe alkyle ou aryle, et

$R^1$ représentant en outre le reste $-\overset{\oplus}{N}H_3\ X^{\ominus}$, $X^{\ominus}$ représentant un chlorure, un bromure ou un iodure, et

n a une valeur de 1 à 5.

2. Utilisation des dérivés d'acides cycloalcane-carboxyliques selon la revendication 1, pour la régulation de la croissance des végétaux.

3. Dérivés d'acides cycloalcane-carboxyliques de formule:

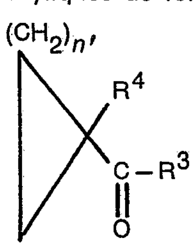

(Ia)

dans laquelle:

$R^3$ représente un groupe alcoxy en C1-C20, benzyloxy, amino, alkylamino en C1-C4, dialkylamino contenant de 1 à 4 atomes de carbone dans chacun des groupes alkyle, ou le reste

$O^{\ominus}M^{\ominus}$

dans lequel $M^{\oplus}$ représente un ion sodium ou potassium, un équivalent d'ion magnésium ou calcium, un radical ammonium, alkylammonium en C1-C4 dialkylammonium, trialkylammonium ou tétraalkylammonium contenant de 1 à 4 atomes de carbone dans chacun des groupes alkyle,

$R^4$ représente le groupe amino ou le reste

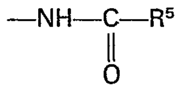

dans lequel

$R^5$ représente l'hydrogène lorsque $R^3$ ne représente pas le groupe éthoxy, ou un groupe alkyle en C1-C4 mais non méthyle lorsque $R^3$ représente le groupe méthoxy, $R^5$ représentant en outre le groupe phényle, et

$R^4$ représentant en outre $-\overset{\oplus}{N}H_3Cl^{\ominus}$ à condition que $R^3$ ne représente pas le groupe éthoxy, et $n'$ est égal à 1 ou 2.

4. Procédé de préparation de dérivés d'acides cycloalcane-carboxyliques de formule:

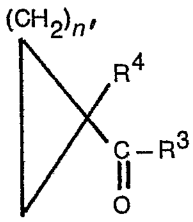

(Ia)

dans laquelle:

$R^3$ représente un groupe alcoxy en C1-C20, benzyloxy, amino, alkylamino en C1-C4, dialkylamino contenant de 1 à 4 atomes de carbone dans chaque reste alkyle, ou le reste

$O^{\ominus}M^{\oplus}$

dans lequel $M^{\oplus}$ représente un ion sodium ou potassium, un équivalent d'ion magnésium ou calcium, un groupe ammonium, alkylammonium en C1-C4, dialkylammonium, trialkylammonium ou tétraalkylammonium contenant de 1 à 4 atomes de carbone dans chaque groupe alkyle,

$R^4$ représente le groupe amino ou le reste

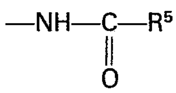

dans lequel

$R^5$ représente l'hydrogène lorsque $R^3$ ne représente pas le groupe éthoxy, ou un groupe alkyle en C1-C4 mais non le groupe méthyle lorsque $R^3$ représente le groupe méthoxy, $R^5$ représentant en outre le groupe phényle, et

$R^4$ représentant en outre $-\overset{\oplus}{N}H_3Cl^{\ominus}$ à condition que $R^3$ ne représente pas le groupe éthoxy, et $n'$ est égal à 1 ou 2, caractérisé en ce que:

a) pour préparer les dérivés d'acides cycloalcane-carboxyliques de formule (Ia), dans laquelle $R^4$ représente le groupe formylamino, on hydrolyse à l'aide d'eau des dérivés d'acides $\alpha$-isocyano-cycloalcane-carboxyliques de formule:

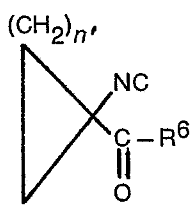

(II)

dans laquelle:

$R^6$ représente un groupe alcoxy en C1-C20 à l'exception du groupe éthoxy, un groupe benzyloxy, amino, alkylamino en C1-C4, dialkylamino contenant de 1 à 4 atomes de carbone dans chacun des groupes alkyle ou le reste $O^{\ominus}M^{\oplus}$, $M^{\oplus}$ ayant la signification indiquée ci-dessus, et

n' a la signification indiquée ci-dessus, éventuellement en présence d'un catalyseur et éventuellement en présence d'un diluant additionnel,

b) pour préparer les dérivés d'acides cycloalcane-carboxyliques de formule (Ia), dans laquelle $R^4$ représente le groupe formylamino et $R^3$ représente OM, $M^{\oplus}$ représentant un ion sodium ou potassium, on fait réagir des dérivés d'acides $\alpha$-isocyano-cycloalcane-carboxyliques de formule:

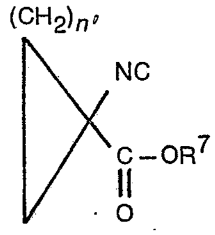

(III)

dans laquelle:

$R^7$ représente un groupe alkyle en C1-C13, et

n' a la signification indiquée ci-dessus, dans des conditions ménagées, éventuellement en présence d'un diluant supplémentaire, avec de l'hydroxyde de sodium ou de potassium, ce qui donne des sels d'acides $\alpha$-isocyano-carboxyliques de formule:

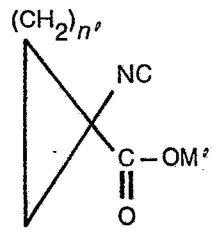

(IV)

dans laquelle:

M' représente un ion sodium ou potassium, et

n' a la signification indiquée ci-dessus, qu'on hydrolyse par ébullition avec un alcool aqueux,

c) pour préparer les dérivés d'acides cycloalcane-carboxyliques de formule (Ia), dans laquelle $R^4$ représente le groupe formylamino et $R^3$ représente OM, M ayant les significations indiquées ci-dessus à l'exception des ions sodium ou potassium, on traite les sels d'acides $\alpha$-formylamino-cycloalcane-carboxyliques de formule:

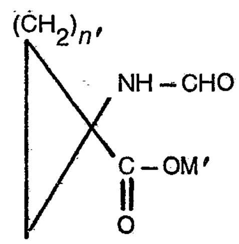

(Ib)

dans laquelle:

M' et n' ont les significations indiquées ci-dessus, qu'on peut préparer par le procédé b), par une quantité équivalente d'un acide fort, éventuellement en présence d'un diluant, ce qui donne les acides $\alpha$-formylamino-cycloalcane-carboxyliques de formule:

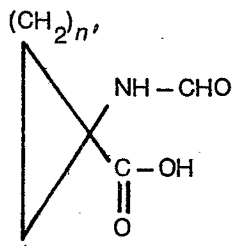

(Ic)

dans laquelle:

n' a la signification indiquée ci-dessus, qu'on fait réagir avec des composés de formule:

$$M''OR^8 \qquad (V)$$

dans laquelle:

M'' représente un équivalent d'ion magnésium ou calcium, un groupe ammonium, alkylammonium en C1-C4, dialkylammonium, trialkylammonium ou tétraalkylammonium contenant de 1 à 4 atomes de carbone dans chacun des groupes alkyle, et

$R^8$ représente l'hydrogène, un groupe méthyle ou éthyle, éventuellement en présence d'un diluant, d) pour préparer les dérivés d'acides cycloalcane-carboxyliques de formule (Ia), dans laquelle $R^4$ représente le groupe formylamino et $R^3$ représente un groupe amino, alkylamino en C1-C4 ou dialkylamino contenant de 1 à 4 atomes de carbone dans chacun des groupes alkyle, on fait réagir les sels d'acides $\alpha$-isocyano-carboxyliques de formule:

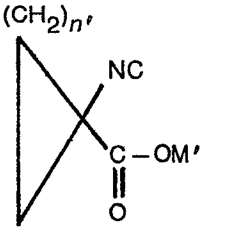
(IV)

dans laquelle:

M' et n' ont les significations indiquées ci-dessus, qu'on peut préparer par le procédé b), avec un composé de formule:

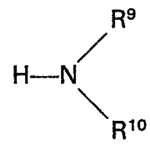
(VI)

dans laquelle:

$R^9$ et $R^{10}$, identiques ou différents, représentent l'hydrogène ou un groupe alkyle en C1-C4, en présence d'acide chlorhydrique et, le cas échéant, en présence d'un diluant,

e) pour préparer des composés de formule (Ia), dans laquelle $R^3$ représente un groupe alcoxy en C1-C20 ou benzyloxy et

$R^4$ représente le reste $—\overset{\oplus}{N}H_3Cl^{\ominus}$, -pour autant que $R^3$ ne représente pas le groupe éthoxy-, on fait réagir les dérivés d'acides $\alpha$-formylamino-cycloalcane-carboxyliques de formule:

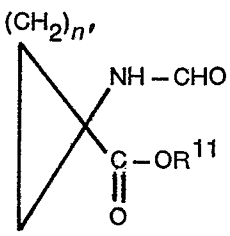
(Id)

dans laquelle:

$R^{11}$ représente un groupe alkyle en C1-C20 ou benzyle, et

n' a la signification indiquée ci-dessus, qu'on peut préparer par le procédé a), avec le chlorure d'hydrogène de formule:

$$HCl \qquad (VII)$$

éventuellement en présence d'un diluant,

f) pour préparer les dérivés d'acides cycloalcane-carboxyliques de formule (Ia), dans laquelle $R^4$ représente le reste $—NH—CO—R^5$, on fait réagir des dérivés d'acides $\alpha$-amino-cycloalcane-carboxyliques de formule:

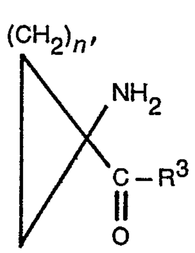
(Ie)

dans laquelle:

$R^3$ et n' ont les significations indiquées ci-dessus, avec des agents acylants de formule:

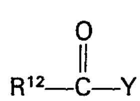
(VIII)

dans laquelle:

$R^{12}$ représente l'hydrogène, un groupe alkyle en C1-C4 ou phényle, et

Y représente le chlore ou le reste —O—CO—$R^{12}$, dans lequel $R^{12}$ a la signification indiquée ci-dessus, en présence d'un accepteur d'acide et, le cas échéant, en présence d'un diluant,
g) pour préparer les dérivés d'acides cycloalcane-carboxyliques de formule (Ia), dans laquelle $R^4$ représente le groupe amino, on fait réagir des chlorures d'acides $\alpha$-amino-cycloalcane-carboxyliques de formule:

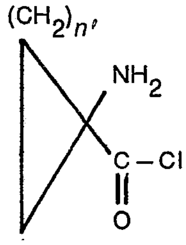

(IX)

dans laquelle:

n' a la signification indiquée ci-dessus, avec des composés de formule:

$R^3H$ (X)

dans laquelle:

$R^3$ a la signification indiquée ci-dessus, éventuellement en présence d'un agent fixant les acides et éventuellement en présence d'un diluant.